# EUROPEAN PATENT APPLICATION

(11) **EP 4 741 731 A1**
(43) Date of publication of application: **13.05.2026**
(21) Application number: 24839501.4
(22) Date of filing: 24.06.2024
(51) Int. Cl.: F24S 70/60, B32B 7/027, F24S 70/25, F24S 70/225, F24S 70/275

(54) **COMPOSITE COOLING MATERIAL**

(30) Priority: 07.07.2023 JP 2023112666
(71) Applicant: Osaka Gas Co., Ltd., Osaka-shi, Osaka 541-0046 (JP)
(72) Inventor: OSUGI, Ryosuke, Osaka-shi, Osaka 541-0046 (JP); SUEMITSU, Masahiro, Osaka-shi, Osaka 541-0046 (JP); OOHASHI, Kenji, Osaka-shi, Osaka 541-0046 (JP)
(74) Representative: LBP Lemcke, Brommer & Partner Patentanwälte mbB
(86) International application number: PCT/JP2024/022864
(87) International publication number: WO 2025/013608

(57) **Abstract**

Provided is a composite cooling material with improved ease of use. The composite cooling material includes a magnetic material layer E including a magnetic material and a cooling layer CP provided on an outer surface of the magnetic material layer E, and has a first optical characteristic of having a solar reflectance of 80% or more.

## Description

### Technical Field

The present disclosure relates to a composite cooling material that has a function of cooling a back surface of the material.

### Background Art

Radiative cooling is known as a function of cooling a back surface of a material. Radiative cooling is a phenomenon in which the temperature of a substance decreases as a result of the substance radiating electromagnetic waves such as infrared rays to the surrounding environment. By using this phenomenon, it is possible to configure a composite cooling material (composite cooling device) that cools a cooling target without consuming energy such as electricity, for example.

As a conventional example of a composite cooling material (composite cooling device), there is a composite cooling material including: an infrared radiative layer having a radiative surface for radiating infrared light; and a light reflective layer on a side of the infrared radiative layer, which is opposite to the radiative surface (see Patent Document 1, for example).

That is, the composite cooling material (composite cooling device) can cool a cooling target even under solar radiation during the day because the infrared radiative layer emits a large heat radiation energy in a wavelength range from 8 µm to 14 µm and the light reflective layer reflects light (ultraviolet light, visible light, infrared light) that has passed through the infrared radiative layer, and causes the light to be radiated from the radiative surface, thus avoiding a situation in which the cooling target is heated.

In addition to light that has passed through the infrared radiative layer, light radiated from the infrared radiative layer toward the light reflective layer is also reflected by the light reflective layer toward the infrared radiative layer, but in the following description, the light reflective layer is described as being provided for the purpose of reflecting light (ultraviolet light, visible light, infrared light) that has passed through the infrared radiative layer.

### Prior Art Document

### Patent Document

Patent Document 1: JP 2018-526599A

### Disclosure of the Invention

### Problem to be Solved by the Invention

As an application example of a composite cooling material, there are cases where it is desired to use the composite cooling material by pasting (attaching) the material to an outer surface of a plate-shaped metal member (e.g., made of metal such as iron or an iron alloy, or a steel plate), such as an outer surface of an automobile or an outer surface of a container, with an adhesive agent or a pressure-sensitive adhesive agent.

In such cases, a layer that is the closest to the back surface of the composite cooling material, e.g., a separation-side protective layer is used to join the composite cooling material to an attachment target. That is, the separation-side protective layer is pasted to an outer surface of a plate-shaped metal member with an adhesive agent or a pressure-sensitive adhesive agent.

However, if the separation-side protective layer is made of an acrylic resin, the separation-side protective layer cannot be appropriately pasted to the plate-shaped metal member with an adhesive agent. Accordingly, conventional composite cooling materials are not easy to use in some cases, and improvement is desired.

The present disclosure was made in view of the above problem, and has an object of providing a composite cooling material that has improved ease of use.

### Means for Solving Problem

A composite cooling material according to an embodiment of the present disclosure is characterized by including:
a magnetic material layer including a magnetic material; and
a cooling layer provided on an outer surface of the magnetic material layer,
wherein the cooling layer has a first optical characteristic of having a solar reflectance of 80% or more.

According to this configuration, the cooling layer has the first optical characteristic of having a solar reflectance of 80% or more, and therefore, the composite cooling material can favorably exhibit a predetermined solar reflection function.

Moreover, the composite cooling material according to this configuration includes, on its back surface side opposite to an outer surface of the cooling layer, the magnetic material layer that can be attached to a plate-shaped metal member, which is an attachment target, with magnetic force, and accordingly, the composite cooling material can be attached to the attachment target.

That is, if a plate-shaped metal member to which the magnetic material layer can be attached with magnetic force generated in the magnetic material layer is appropriately selected as the attachment target, the composite cooling material can be favorably attached to the plate-shaped member.

In short, with the characteristic configuration of the composite cooling material, it is possible to improve ease of use of the composite cooling material.

The composite cooling material is further characterized in that
the cooling layer includes: an infrared radiative layer having a radiative surface for radiating infrared light; and a light reflective layer on a side of the infrared radiative layer, which is opposite to the radiative surface, and the cooling layer has a second optical characteristic of having an average emissivity of 80% or more, the average emissivity being a wavelength average emissivity of infrared light in a wavelength range of 8 µm or more and 14 µm or less,
the infrared radiative layer is a resin material layer including a vinyl chloride resin or a vinylidene chloride resin and having a thickness adjusted so that the resin material layer emits heat radiation energy greater than absorbed solar energy in a wavelength range from 8 µm to 14 µm,
the light reflective layer includes silver or a silver alloy, and
the cooling layer and the magnetic material layer are joined by a joining layer including any one or two or more of a vinyl chloride resin, a vinylidene chloride resin, a polyolefin resin, a polyester resin, an acrylic resin, a urethane resin, a silicone resin, and a rubber resin.

Sunlight incident on the radiative surface of the infrared radiative layer of the cooling layer passes through the resin material layer, and is then reflected by the light reflective layer on a side of the resin material layer, which is the side opposite to the radiative surface, and is released from the radiative surface to the outside of the system.

Note that, in the present specification, when the term light is used alone, the concept of light encompasses ultraviolet light (ultraviolet rays), visible light, and infrared light. When these are described in terms of the wavelength of light, which is electromagnetic waves, the light encompasses electromagnetic waves having wavelengths of 10 nm to 20000 nm (electromagnetic waves having wavelengths of 0.01 µm to 20 µm).

Also, heat conducted (input) to the cooling layer is converted to infrared rays in the resin material layer, which is the infrared radiative layer, and released from the radiative surface to the outside of the system.

As described above, the cooling layer can reflect sunlight emitted toward the cooling layer and radiate heat conducted to the cooling layer (e.g., heat conducted from the atmosphere or a film material cooled by the cooling layer) as infrared light to the outside of the system.

Also, the cooling layer has the second optical characteristic of having an average emissivity of 80% or more, which is a wavelength average emissivity of infrared light in a wavelength range of 8 µm or more and 14 µm or less, and the resin material layer has a thickness adjusted so that the resin material layer emits heat radiation energy greater than absorbed solar energy in a wavelength range from 8 µm to 14 µm, and accordingly, the composite cooling material can exhibit a cooling function even under solar radiation during the day while sunlight is appropriately reflected by the light reflective layer including silver or a silver alloy.

Therefore, the cooling layer can cool a region inward of the cooling layer (on the magnetic material layer side) with a radiative cooling effect even under solar radiation during the day.

A thin film of vinyl chloride resin or vinylidene chloride resin softens when a plasticizer is added thereto, and accordingly, even if another object comes into contact with the film, the film flexibly deforms to conform to the object and is kept from being damaged, and therefore, a good appearance of the film can be maintained for a long period of time. Note that a thin film of fluorocarbon resin is hard, and accordingly cannot flexibly deform and is likely to be damaged when another object comes into contact therewith, and therefore, it is difficult to maintain a good appearance of the film.

Moreover, if a plasticizer is added to a vinyl chloride-based resin, the vinyl chloride-based resin deforms when heated to 80°C or more, and accordingly, even if a scratch is formed in a surface of the film, the scratch disappears and the surface becomes smooth. That is, the film can repair the scratch by itself. The fluorocarbon resin and silicone rubber do not have such characteristics. Owing to the characteristics of the soft vinyl chloride-based resin, a good appearance can be maintained for a long period of time. Consequently, radiative cooling properties can be maintained for a long period of time.

Moreover, the vinyl chloride-based resin is flame retardant and unlikely to undergo biodegradation, and therefore can be preferably used as a resin material to form a resin material layer of a radiative cooling device that is used outdoors.

The vinyl chloride-based resin used in the present invention is a homopolymer of vinyl chloride or vinylidene chloride or a copolymer of vinyl chloride or vinylidene chloride, and produced with use of a conventionallyknown polymerization method.

In addition to the vinyl chloride-based resin in the form of a thin film being flexible, the plasticizer is mixed in the vinyl chloride-based resin to soften the vinyl chloride-based resin. Accordingly, the flexibility of the resin material layer is further increased, and consequently the radiative cooling device becomes flexible.

Moreover, by joining the cooling layer and the magnetic material layer with the joining layer including any one or more of a vinyl chloride resin, a vinylidene chloride resin, a polyolefin resin, an acrylic resin, a urethane resin, a silicone resin, and a rubber resin as in this configuration, it is possible to favorably join the cooling layer and the magnetic material layer.

The composite cooling material is further characterized in that the joining layer includes at least one of a vinyl chloride resin and a polyolefin resin.

According to this configuration, the joining layer joining the cooling layer and the magnetic material layer is made of at least one of a vinyl chloride resin and a polyolefin resin, and therefore, the cooling layer and the magnetic material layer can be joined more favorably.

The composite cooling material is further characterized in that the magnetic material layer includes at least ferrite and a binder resin, and has a thickness of 0.2 mm or more and 2.0 mm or less.

The magnetic material layer can be made of a material including at least ferrite and a binder resin as in this configuration. Particularly when the magnetic material layer has a thickness of 0.2 mm or more, the magnetic material layer can favorably exhibit magnetic force as attaching force with respect to a plate-shaped metal member, which is an attachment target, and long-term attachment stability can be increased. Also, when the magnetic material layer has a thickness of 2.0 mm or less, it is possible to maintain at least a certain level of heat dissipation properties in the direction from the back surface side toward the outer surface side even if there is a heat source on the back surface side of the composite cooling material.

The composite cooling material is further characterized in that
the cooling layer includes an infrared radiative layer having a radiative surface for radiating infrared light, and
the infrared radiative layer includes a plurality of particulate light reflecting portions that reflect light.

According to this configuration, the infrared radiative layer of the cooling layer includes the plurality of particulate light reflecting portions that reflect light, and accordingly, it is possible to impart the infrared radiative layer serving as a radiative layer with the function of a light reflective layer that reflects light by, for example, providing the infrared radiative layer with a sufficient amount of the particulate light reflecting portions. Accordingly, in some cases, there is no need to separately provide the light reflective layer made of metal such as silver or a silver alloy, and this enables cost reduction.

Even in the configuration in which the composite cooling material includes a composite cooling layer including the light reflective layer that reflects light in addition to the infrared radiative layer that radiates infrared light, if the infrared radiative layer includes the plurality of particulate light reflecting portions, light is reflected by the light reflecting portions in the infrared radiative layer as well as by the light reflective layer (solar reflection), and therefore, when the intensity of solar radiation is high, the cooling function can be exhibited more effectively.

It should be noted that, according to this configuration, even if the light reflective layer made of silver or a silver alloy breaks and a crack is formed therein during attachment of the composite cooling material to an attachment target, for example, light can be reflected by the light reflecting portions of the infrared radiative layer, and accordingly, a reduction in the cooling performance can be suppressed.

In the composite cooling material described above, the light reflecting portions preferably have a particle size of 1 nm or more and 300 µm or less.

Furthermore, in the composite cooling material described above, the light reflecting portions are preferably porous.

Furthermore, in the composite cooling material described above, it is preferable that
the light reflecting portions include at least one of an inorganic filler and an organic filler,
the inorganic filler includes at least one type of particles selected from glass microbeads, ceramic microbeads, silicon oxide particles, silicon carbide particles, silicon nitride particles, barium sulfate particles, and calcium carbonate particles, and
the organic filler includes at least one type of polymer having a functional group selected from C-O, C-Cl, C-F, C-N, C-Si, and Si-O.

In the composite cooling material described above, it is preferable that
the cooling layer includes an inorganic filler, and
the inorganic filler includes at least one type of particles selected from glass microbeads, ceramic microbeads, silicon oxide particles, silicon carbide particles, silicon nitride particles, barium sulfate particles, and calcium carbonate particles.

The composite cooling material is further characterized in that
the resin material layer has a thickness adjusted so that the resin material layer has light absorption properties that allow for a wavelength average absorptivity of 13% or less in a wavelength range from 0.4 µm to 0.5 µm, a wavelength average absorptivity of 4% or less in a wavelength range from 0.5 µm to 0.8 µm, a wavelength average absorptivity of 1% or less in a wavelength range from 0.8 µm to 1.5 µm, and a wavelength average absorptivity of 40% or less in a wavelength range from 1.5 µm to 2.5 µm.

Note that the wavelength average absorptivity in the wavelength range from 0.4 µm to 0.5 µm refers to an average value of absorptivities at respective wavelengths within the range from 0.4 µm to 0.5 µm. The same applies to the wavelength average absorptivity in the wavelength range from 0.5 µm to 0.8 µm, the wavelength average absorptivity in the wavelength range from 0.8 µm to 1.5 µm, and the wavelength average absorptivity in the wavelength range from 1.5 µm to 2.5 µm. Also, similar descriptions including the description of emissivity refer to similar average values, and this applies to the following description of the present specification.

That is, the absorptivity and the emissivity (light emissivity) of the resin material layer vary according to the thickness of the resin material layer. Therefore, the thickness of the resin material layer needs to be adjusted in such a manner that the resin material layer does not absorb sunlight as far as possible and radiates a large amount of heat in the wavelength band of so-called atmospheric window (light wavelength range from 8 µm to 14 µm).

Specifically, from the viewpoint of absorptivity (light absorption properties) of the resin material layer for sunlight, the wavelength average absorptivity in the wavelength range from 0.4 µm to 0.5 µm needs to be 13% or less, the wavelength average absorptivity in the wavelength range from 0.5 µm to 0.8 µm needs to be 4% or less, the wavelength average absorptivity in the wavelength range from 0.8 µm to 1.5 µm needs to be 1% or less, and the wavelength average absorptivity in the wavelength range from 1.5 µm to 2.5 µm needs to be 40% or less. Note that a wavelength average absorptivity in a wavelength range from 2.5 µm to 4 µm may be 100% or less.

In the case of such an absorptivity distribution, the absorptivity for sunlight is 10% or less, which corresponds to an energy of 100 W or less.

The absorptivity for sunlight increases as the film thickness of the resin material layer is increased. When the resin material layer is made thick, the emissivity in the atmospheric window becomes approximately 1, and the amount of heat radiated toward the universe at that time is 125 W/m² to 160 W/m².

The amount of sunlight absorbed by the light reflective layer is preferably 50 W/m² or less.

Accordingly, cooling progresses if the sum of amounts of sunlight absorbed by the resin material layer and the light reflective layer is 150 W/m² or less and the atmosphere is in good conditions. It is preferable to use a resin material layer that has a small absorptivity in the vicinity of a peak value of the sunlight spectrum as described above.

Also, from the viewpoint of emissivity of infrared radiation (heat radiation properties) of the resin material layer, the wavelength average emissivity in the wavelength range from 8 µm to 14 µm needs to be 40% or more.

That is, in order to emit heat of about 50 W/m² absorbed from sunlight by the light reflective layer to the universe from the resin material layer, the resin material layer needs to radiate heat more than or equal to the absorbed heat.

For example, when the ambient temperature is 30°C, the maximum heat radiation in the atmospheric window of the wavelength range from 8 µm to 14 µm is 200 W/m² (calculated with the emissivity taken as 1). This value can be obtained in an environment in which the air is thin and very dry, such as an environment on a high mountain, in cloudless weather. When compared with a high mountain, the thickness of the atmosphere increases in a lowland, for example, and accordingly, the wavelength band of the atmospheric window becomes narrower and the transmittance decreases. This is said as "the atmospheric window becoming narrower".

Also, the composite cooling material is actually used in a humid environment, and the atmospheric window becomes narrower in such a case as well. When the composite cooling material is used in a lowland, heat radiation in the atmospheric window band is estimated to be 160 W/m² (calculated with the emissivity taken as 1) at 30°C under good conditions.

Moreover, when there is haze or smog in the sky, as is often the case in Japan, the atmospheric window further becomes narrower and radiation to the universe becomes about 125 W/m².

In view of the foregoing, the composite cooling material cannot be used in a lowland in the mid-latitude area unless the wavelength average emissivity in the wavelength range from 8 µm to 14 µm is 40% or more (heat radiation intensity in the atmospheric window band is 50 W/m² or more).

Therefore, when the thickness of the resin material layer is adjusted so as to fall within the range of optical prescriptions described above, the amount of heat output in the atmospheric window becomes greater than the amount of heat input through absorption of sunlight, and radiative cooling can be performed in an outdoor environment even under solar radiation during the day.

That is, in the case where the resin material layer is made of a vinyl chloride resin or a vinylidene chloride resin, the thickness of the resin material layer is preferably 10 µm or more and 100 µm or less.

In short, with the above-described characteristic configuration of the composite cooling material, the amount of heat output in the atmospheric window becomes greater than the amount of heat input through absorption of sunlight, and radiative cooling can be performed in an outdoor environment even under solar radiation.

The composite cooling material is further characterized in that the light reflective layer has a reflectance of 90% or more in a wavelength range from 0.4 µm to 0.5 µm, and a reflectance of 96% or more with respect to light having a wavelength longer than 0.5 µm.

The spectrum of sunlight spans from a wavelength of 0.295 µm to a wavelength of 4 µm, and the intensity increases as the wavelength increases from 0.4 µm, and the intensity is particularly high in a wavelength range from 0.5 µm to 2.5 µm.

When the light reflective layer has reflection properties that allow for a reflectance of 90% or more in the wavelength range from 0.4 µm to 0.5 µm and a reflectance of 96% or more for light having a wavelength longer than 0.5 µm, solar energy absorbed by the light reflective layer is as small as about 5% or less.

Consequently, solar energy absorbed by the light reflective layer at the time of meridian transit in summer can be suppressed to about 50 W/m² or less, and the resin material layer can favorably perform radiative cooling.

Note that, in the present specification, the spectrum of sunlight is in accordance with the standard of AM1.5G, unless otherwise stated.

In short, with the above-described characteristic configuration of the composite cooling material, it is possible to suppress absorption of solar energy by the light reflective layer and allow the resin material layer to favorably perform radiative cooling.

The composite cooling material is further characterized in that the light reflective layer has a thickness of 50 nm or more.

In order to make the light reflective layer have the reflectance characteristics described above, i.e., a reflectance of 90% or more in the wavelength range from 0.4 µm to 0.5 µm and a reflectance of 96% or more for light having a wavelength longer than 0.5 µm, silver or a silver alloy needs to be used as a reflective material that constitutes the radiative surface side portion of the light reflective layer as described above.

In a case where sunlight is to be reflected by the light reflective layer made of only silver or a silver alloy as in the above-described characteristic configuration in such a manner as to satisfy the reflectance characteristics described above, a thickness of 50 nm or more is required.

In short, with the above-described characteristic configuration of the composite cooling material according to the present invention, it is possible to appropriately suppress absorption of solar energy by the light reflective layer and allow the resin material layer to favorably perform radiative cooling.

The composite cooling material is further characterized in that the light reflective layer has a layered structure including silver or a silver alloy close to the resin material layer and aluminum or an aluminum alloy apart from the resin material layer.

That is, in order to make the light reflective layer have the reflectance characteristics described above, it is also possible to adopt a layered structure including silver or a silver alloy and aluminum or an aluminum alloy. In this case as well, it is necessary to use silver or a silver alloy as the reflective material on the radiative surface side. In this case, the thickness of silver needs to be 10 nm or more, and the thickness of aluminum needs to be 30 nm or more.

Since aluminum or an aluminum alloy is inexpensive compared with silver or a silver alloy, it is possible to reduce the cost of the light reflective layer while making the light reflective layer have appropriate reflectance characteristics.

That is, when the layered structure including silver or a silver alloy and aluminum or an aluminum alloy is adopted for the light reflective layer and the thickness of silver or the silver alloy, which is expensive, is reduced to reduce the cost of the light reflective layer, it is possible to reduce the cost of the light reflective layer while making the light reflective layer have appropriate reflectance characteristics.

In short, with the characteristic configuration of the composite cooling material, it is possible to reduce the cost of the light reflective layer while making the light reflective layer have appropriate reflectance characteristics.

### Brief Description of the Drawings

FIG. 1 is a diagram showing a basic configuration of a composite cooling material.
FIG. 2 is a diagram showing a relationship between absorptivities of resin materials and the wavelength.
FIG. 3 is a diagram showing an emissivity spectrum of a vinyl chloride resin.
FIG. 4 is a diagram showing an emissivity spectrum of a vinylidene chloride resin.
FIG. 5 is a diagram showing a reflectance spectrum of a light reflective layer that contains silver as a base material.
FIG. 6 is a diagram showing a specific configuration of the composite cooling material.
FIG. 7 is a diagram showing a specific configuration of the composite cooling material.
FIG. 8 is a diagram showing a specific configuration of the composite cooling material.
FIG. 9 is a diagram showing a specific configuration of the composite cooling material.
FIG. 10 is a diagram showing a relationship between the light transmittance of polyethylene and the wavelength.
FIG. 11 is a diagram showing a configuration for a test.
FIG. 12 is a diagram showing a test result of a case where a protective layer was made of polyethylene.
FIG. 13 is a diagram showing a test result of a case where the protective layer was made of an ultraviolet absorbing acrylic resin.
FIG. 14 is a diagram showing an emissivity spectrum of polyethylene.
FIG. 15 is a diagram showing experimental results of plasticizers mixed with a vinyl chloride resin.
FIG. 16 is a diagram showing another configuration of a cooling layer.
FIG. 17 is a diagram showing a configuration in which irregularities are formed in the cooling layer.
FIG. 18 is a diagram showing a specific example of irregularities in the cooling layer.
FIG. 19 is a diagram showing a specific example of irregularities in the cooling layer.
FIG. 20 is a diagram showing a configuration in which a resin material layer includes light reflecting portions.
FIG. 21 is a diagram showing a configuration in which the resin material layer includes light reflecting portions.
FIG. 22 is a diagram showing a configuration in which an adhesive layer includes light reflecting portions.
FIG. 23 is a diagram showing a configuration in which the adhesive layer includes light reflecting portions.
FIG. 24 is a graph showing an experimental result.
FIG. 25 is a diagram showing a configuration in which irregularities are formed in front and rear surfaces of the resin material layer.

### Best Mode for Carrying out the Invention

The following describes an embodiment of the present invention based on the drawings.

### [Basic Configuration of Composite Cooling Material]

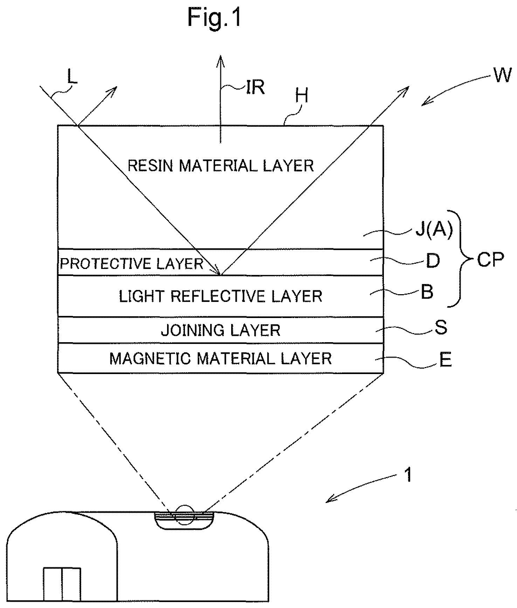

As shown in FIG. 1, a composite cooling material W includes a magnetic material layer E including a magnetic material having magnetic force and a film-shaped cooling layer CP joined (attached) to an outer surface of the magnetic material layer E, and is configured to cool a back surface side of the magnetic material layer E (the underside in FIG. 1: the side of the magnetic material layer E opposite to the cooling layer CP) by a radiative cooling effect of the cooling layer CP. The cooling layer CP shown in FIG. 1 is joined to the outer surface of the magnetic material layer E by a joining layer S made of resin, which will be described later.

FIG. 1 shows an example in which the composite cooling material W is attached to a warehouse 1 having a roof and a side surface formed from plate-shaped metal members. That is, a plurality of composite cooling material W are attached to the roof and the side surface of the warehouse 1, which are attachment targets. Note that the plate-shaped metal members that are attachment targets are made of a material to which the composite cooling material can be attached by magnetic force generated by the magnetic material, and preferable examples of the material include iron, an iron alloy, a steel plate, and the like.

The cooling layer CP includes: an infrared radiative layer A having a radiative surface H for radiating infrared light IR; a light reflective layer B on a side of the infrared radiative layer A, which is the side opposite to the radiative surface H; and a protective layer D between the infrared radiative layer A and the light reflective layer B. The cooling layer CP is in the form of a film obtained by stacking the infrared radiative layer A, the light reflective layer B, and the protective layer D on one another.

That is, the cooling layer CP is configured as a radiative cooling film.

The cooling layer CP has a first optical characteristic of having a solar reflectance of 80% or more, and a second optical characteristic of having an average emissivity of 80% or more, which is a wavelength average emissivity of infrared light in a wavelength range of 8 µm or more and 14 µm or less.

The light reflective layer B reflects light L, such as sunlight, that has passed through the infrared radiative layer A and the protective layer D, and has reflection properties that allow for a reflectance of 90% or more in a wavelength range from 400 nm to 500 nm and a reflectance of 96% or more for light having a wavelength longer than 500 nm.

The spectrum of sunlight spans from a wavelength of 300 nm to a wavelength of 4000 nm, and the intensity increases as the wavelength increases from 400 nm, and the intensity is particularly high in a wavelength range from 500 nm to 1800 nm.

In the present embodiment, light L encompasses ultraviolet light (ultraviolet rays), visible light, and infrared light. When these are described in terms of the wavelength of light, which is electromagnetic waves, the light L encompasses electromagnetic waves having wavelengths of 10 nm to 20000 nm (electromagnetic waves having wavelengths of 0.01 µm to 20 µm). In the present specification, the wavelength range of ultraviolet light (ultraviolet rays) is taken as a range from 295 nm to 400 nm.

Since the light reflective layer B exhibits the reflection properties that allow for a reflectance of 90% or more in the wavelength range from 400 nm to 500 nm and a reflectance of 96% or more for light having a wavelength longer than 500 nm, solar energy absorbed by the light reflective layer B of the cooling layer CP (radiative cooling film) can be suppressed to 5% or less. That is, solar energy absorbed at the time of meridian transit in summer can be suppressed to about 50 W.

The light reflective layer B is constituted by silver or a silver alloy or has a layered structure constituted by silver or a silver alloy adjacent to the protective layer D and aluminum or an aluminum alloy apart from the protective layer D. The light reflective layer B is flexible. Details of the light reflective layer B will be described later.

The infrared radiative layer A is configured as a resin material layer J made of a vinyl chloride resin or a vinylidene chloride resin with a thickness adjusted so that the resin material layer J emits heat radiation energy greater than absorbed solar energy in a wavelength range from 8 µm to 14 µm. Details of the infrared radiative layer A will be described later.

Accordingly, the cooling layer CP is configured such that the radiative surface H of the infrared radiative layer A reflects a portion of light L incident on the cooling layer CP and the light reflective layer B reflects a portion (e.g., sunlight) of light L incident on the cooling layer CP and transmitted through the resin material layer J and the protective layer D so that the reflected light goes out from the radiative surface H to the outside.

The cooling layer CP is also configured to convert heat input to the cooling layer CP from the magnetic material layer E (e.g., heat conducted from the magnetic material layer E) on the side of the light reflective layer B opposite to the resin material layer J, to infrared light IR in the resin material layer J, radiate the infrared light IR, and thus cool the magnetic material layer E (more specifically, the side of the magnetic material layer E opposite to the cooling layer CP).

That is, the cooling layer CP is configured to reflect light L emitted toward the cooling layer CP and radiate heat conducted to the cooling layer CP (e.g., heat conducted from the atmosphere or the magnetic material layer E) as infrared light IR to the outside.

Also, the cooling layer CP (radiative cooling film) is configured to be flexible due to the resin material layer J, the protective layer D, and the light reflective layer B being flexible.

The magnetic material layer E includes ferrite as the magnetic material and also includes a binder resin. The thickness of the magnetic material layer E is about 0.2 mm or more and 2.0 mm or less, for example. Specifically, the magnetic material layer E is a magnet sheet obtained by forming a sheet from a mixture of pulverized ferrite and the binder resin and magnetizing the sheet.

### [Outline of Resin Material Layer]

The absorptivity and the emissivity (light emissivity) of the resin material forming the resin material layer J vary according to the thickness of the resin material layer. Therefore, the thickness of the resin material layer J needs to be adjusted in such a manner that the resin material layer does not absorb sunlight as far as possible and radiates a large amount of heat in the wavelength band of so-called atmospheric window (light wavelength range from 8 µm to 14 µm).

Specifically, from the viewpoint of absorptivity for sunlight, the thickness of the resin material layer J needs to be adjusted in such a manner that a wavelength average absorptivity in a wavelength range from 0.4 µm to 0.5 µm is 13% or less, a wavelength average absorptivity in a wavelength range from 0.5 µm to 0.8 µm is 4% or less, a wavelength average absorptivity in a wavelength range from 0.8 µm to 1.5 µm is 1% or less, a wavelength average absorptivity in a wavelength range from 1.5 µm to 2.5 µm is 40% or less, and a wavelength average absorptivity in a wavelength range from 2.5 µm to 4 µm is 100% or less.

In the case of such an absorptivity distribution, the absorptivity for sunlight is 10% or less, which corresponds to an energy of 100 W or less.

The absorptivity of the resin material increases as the film thickness of the resin material is increased as described later. When the film thickness of the resin material is made large, the emissivity in the atmospheric window becomes approximately 1, and the amount of heat radiated toward the universe at that time is 125 W/m² to 160 W/m². The amount of sunlight absorbed by the protective layer D and the light reflective layer B is 50 W/m² or less. Cooling progresses if the sum of amounts of sunlight absorbed by the resin material layer J, the protective layer D, and the light reflective layer B is 150 W/m² or less and the atmosphere is in good conditions. It is preferable to use a resin material that has a small absorptivity in the vicinity of a peak value of the sunlight spectrum as described above as the resin material of the resin material layer J.

Also, from the viewpoint of infrared radiation (heat radiation), the thickness of the resin material layer J needs to be adjusted in such a manner that a wavelength average emissivity in the wavelength range from 8 µm to 14 µm is 40% or more.

In order to emit heat energy of about 50 W/m² absorbed from sunlight by the protective layer D and the light reflective layer B to the universe from the resin material layer J through heat radiation from the resin material layer J, the resin material layer J needs to radiate heat more than or equal to the absorbed heat.

For example, when the ambient temperature is 30°C, the maximum heat radiation in the atmospheric window of the wavelength range from 8 µm to 14 µm is 200 W/m² (calculated with the emissivity taken as 1). This value can be obtained in an environment in which the air is thin and very dry, such as an environment on a high mountain, in cloudless weather. When compared with a high mountain, the thickness of the atmosphere increases in a lowland, for example, and accordingly, the wavelength band of the atmospheric window becomes narrower and the transmittance decreases. This is said as "the atmospheric window becoming narrower".

Also, the cooling layer CP (radiative cooling film) is actually used in a humid environment, and the atmospheric window becomes narrower in such a case as well. When the composite cooling material is used in a lowland, heat radiation in the atmospheric window band is estimated to be 160 W/m² (calculated with the emissivity taken as 1) at 30°C under good conditions. Moreover, when there is haze or smog in the sky, as is often the case in Japan, the atmospheric window further becomes narrower and radiation to the universe becomes about 125 W/m².

In view of the foregoing, the composite cooling material cannot be used in a lowland in the mid-latitude area unless the wavelength average emissivity in the wavelength range from 8 µm to 14 µm is 40% or more (heat radiation intensity in the atmospheric window band is 50 W/m² or more).

Therefore, when the thickness of the resin material layer J is adjusted so as to fall within the range of optical prescriptions defined in view of the above circumstances, the amount of heat output in the atmospheric window becomes greater than the amount of heat input through absorption of sunlight, and radiative cooling can be performed in an outdoor environment even under solar radiation.

In the present embodiment, the thickness of the vinyl chloride resin or the vinylidene chloride resin forming the resin material layer J is 10 µm or more and 100 µm or less.

### [Details of Resin Material]

According to Kirchhoff's law, the emissivity (ε) is equal to the absorptivity (A). The absorptivity can be calculated from an absorption coefficient (a) and the following relational expression (hereinafter may be referred to as an absorptivity relational expression): A=1-exp(-αt), where t represents the film thickness.

That is, by adjusting the film thickness of the resin material layer J, it is possible to obtain a large amount of heat radiation in a wavelength band in which the absorption coefficient is large. In a case where radiative cooling is performed outdoors, it is preferable to use a material that has a large absorption coefficient in the wavelength band of the atmospheric window, which is from 8 µm to 14 µm.

Also, in order to suppress absorption of sunlight, it is preferable to use a material that does not have an absorption coefficient or has a small absorption coefficient in a wavelength range from 0.3 µm to 4 µm, and particularly from 0.4 µm to 2.5 µm. As can be understood from the relational expression of the absorption coefficient and the absorptivity, the absorptivity (emissivity) varies according to the film thickness of the resin material.

In order to make the temperature lower than the temperature of the surrounding atmosphere through radiative cooling under solar radiation, it is possible to create a state in which almost no sunlight is absorbed but a large amount of heat is radiated in the atmospheric window, i.e., output of radiative cooling is greater than input of sunlight, by selecting a material that has a large absorption coefficient in the wavelength band of the atmospheric window and almost no absorption coefficient in the wavelength band of sunlight and by adjusting the film thickness.

The sunlight spectrum includes only wavelengths longer than or equal to 0.295 µm. Note that ultraviolet rays are defined as light having a wavelength shorter than 0.4 µm, visible rays are defined as light in a wavelength range from 0.4 µm to 0.8 µm, near-infrared rays are defined as light in a wavelength range from 0.8 µm to 3 µm, mid-infrared rays are defined as light in a wavelength range from 3 µm to 8 µm, and far-infrared rays are defined as light having a wavelength longer than 8 µm.

As for a carbon-chlorine bond (C-Cl), bond energy between carbon and chlorine in an alkene is 3.28 eV, which corresponds to a wavelength of 0.378 µm, and therefore, ultraviolet rays in sunlight are absorbed well, but almost no light in the visible range is absorbed.

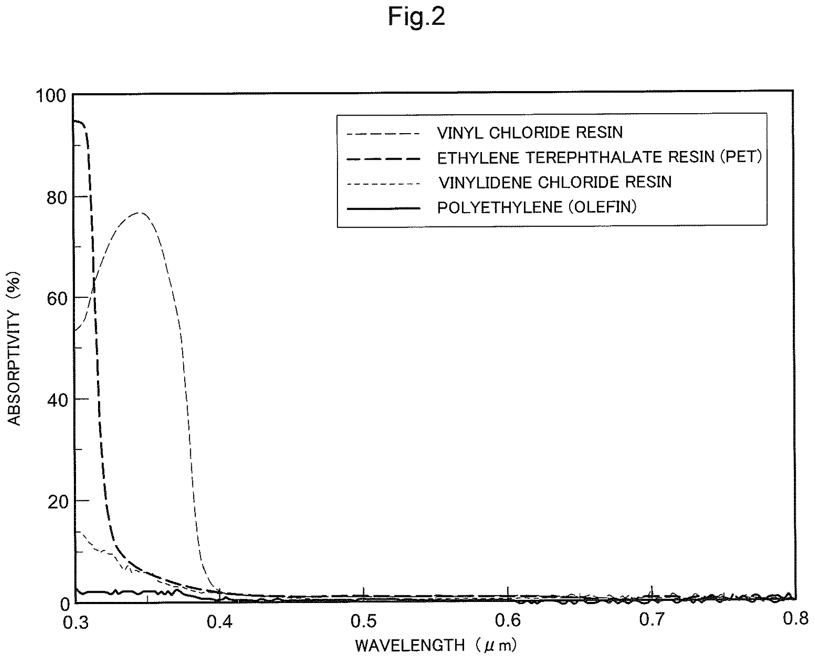

FIG. 2 shows an absorptivity spectrum of a vinyl chloride resin with a thickness of 100 µm in the ultraviolet-visible range. Light absorption is large at wavelengths shorter than 0.38 µm.

FIG. 2 shows an absorptivity spectrum of a vinylidene chloride resin with a thickness of 100 µm in the ultraviolet-visible range. A slight increase can be observed in the absorptivity spectrum at wavelengths shorter than 0.4 µm.

FIG. 2 also shows an absorptivity spectrum of an ethylene terephthalate resin with a thickness of 40 µm in the ultraviolet-visible range and an absorptivity spectrum of an ethylene resin in the ultraviolet-visible range.

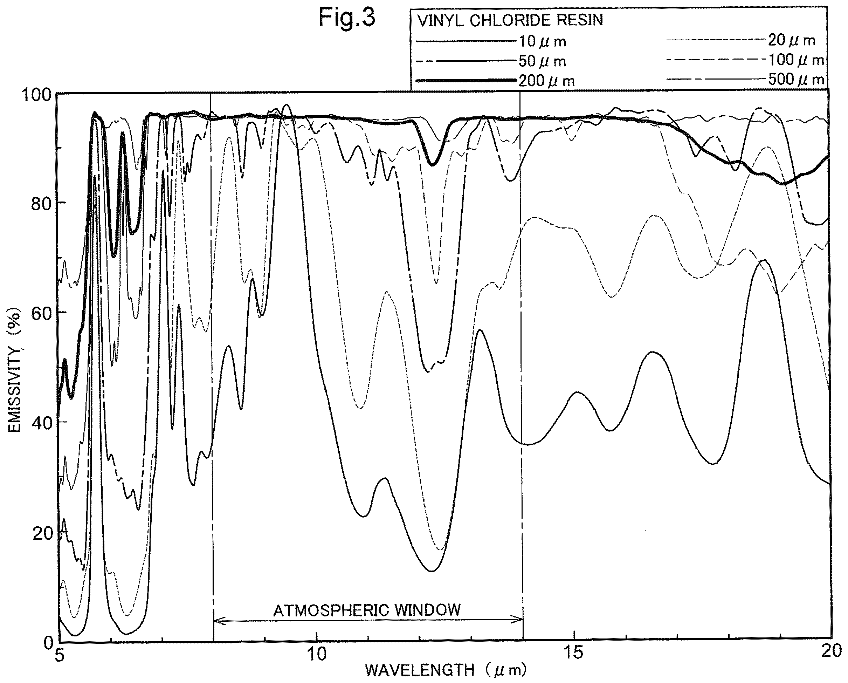

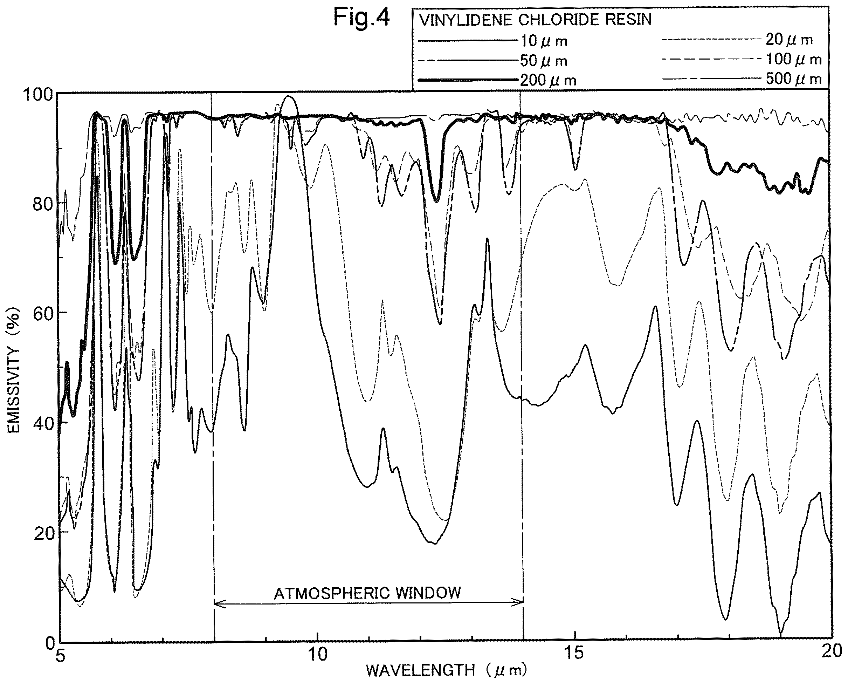

FIG. 3 shows the emissivity of a vinyl chloride resin (PVC), which has a carbon-chlorine bond, in the atmospheric window. Also, FIG. 4 shows the emissivity of a vinylidene chloride resin (PVDC), which has a carbon-chlorine bond, in the atmospheric window.

As for the carbon-chlorine bond, an absorption coefficient for stretching vibration of C-Cl appears around a wavelength of 12 µm over a wide range with a half width of 1 µm or more.

Also, in the case of the vinyl chloride resin, an absorption coefficient for bending vibration of C-H in an alkene contained in the main chain appears at a wavelength of about 10 µm under the influence of electron-withdrawing of chlorine. The same also applies to the vinylidene chloride resin.

Under the influence of these, a wavelength average emissivity when the thickness is 10 µm is 43% in the wavelength range from 8 µm to 14 µm and falls within the prescribed range of the wavelength average emissivity of 40% or more. As shown in FIGS. 3 and 4, the emissivity in the atmospheric window range increases as the film thickness is increased.

As shown in FIG. 3, in the case of the vinyl chloride resin, the amount of heat radiation in the atmospheric window range hardly increases even when the film thickness is increased to more than 100 µm. That is, in the case of the vinyl chloride resin, heat radiation in the atmospheric window occurs in a portion of the resin material that is within a depth of about 100 µm from the surface, and radiation from a deeper portion does not go to the outside.

FIG. 4 shows that the matter described for the vinyl chloride resin also applies to the vinylidene chloride resin.

As described above, heat radiation from the surface of a resin material in the atmospheric window range occurs in a portion of the resin material that is within a depth of about 100 µm from the surface, and when the thickness of the resin material is increased to more than 100 µm, cold heat obtained through radiative cooling performed by the cooling layer CP is insulated by a portion of the resin material that does not contribute to heat radiation.

Assume a case where an ideal resin material layer J that does not absorb sunlight at all is formed on the light reflective layer B. In this case, sunlight is only absorbed by the light reflective layer B of the cooling layer CP.

Resin materials generally have a thermal conductivity of about 0.2 W/m/K, and when a calculation is performed taking the thermal conductivity into account, the temperature of a cooling surface (a surface of the light reflective layer B, which is opposite to the resin material layer J) increases when the thickness of the resin material layer J is larger than 20 mm.

Even if there is an ideal resin material that does not absorb sunlight at all, the thermal conductivity of a resin material is generally about 0.2 W/m/K, and accordingly, when the thickness of the resin material layer is larger than 20 mm, the light reflective layer B is heated by solar radiation and the magnetic material layer E on the light reflective layer side is heated. That is, the thickness of the resin material in the cooling layer CP needs to be 20 mm or less.

### [Thickness of Resin Material Layer]

From the viewpoint of practical use of the cooling layer CP, the thinner the resin material layer J, the better. The thermal conductivity of a resin material is generally lower than those of metal, glass, and the like. In order to effectively cool the magnetic material layer E, it is preferable that the resin material layer J has the minimum required thickness. Heat radiation in the atmospheric window increases as the film thickness of the resin material layer J is increased, and heat radiation energy in the atmospheric window is saturated when the film thickness exceeds a certain thickness.

Although the film thickness of the resin material layer at which heat radiation energy is saturated varies according to the resin material, in the case of a resin having a carbon-chlorine bond, heat radiation energy is saturated even when the thickness is 100 µm, and sufficient heat radiation can be obtained in the atmospheric window range even when the thickness is 50 µm. The smaller the thickness of the resin material is, the higher the thermal transmittance becomes and the more effectively the temperature of the magnetic material layer E can be reduced. In the case of a resin having a carbon-chlorine bond, when the thickness is 50 µm or less, thermal insulation properties are suppressed and the magnetic material layer E can be effectively cooled. In the case of a resin having a carbon-chlorine bond, the magnetic material layer E can be effectively cooled when the thickness is 100 µm or less.

When the thickness is reduced, it is possible to obtain an effect other than the effect of suppressing thermal insulation properties and facilitating conduction of cold heat. That is, it is possible to suppress light absorption by CH, CH₂, and CH₃ in the near-infrared range, which occurs in the case of a resin having a carbon-chlorine bond. When the thickness is reduced, absorption of sunlight by these can be suppressed and consequently, cooling capability of the cooling layer CP is increased.

From the viewpoint described above, in the case of a vinyl chloride resin and a vinylidene chloride resin, which are resins having a carbon-chlorine bond, the radiative cooling effect can be more effectively exhibited under solar radiation when the thickness is 50 µm or less.

### [Details of Light Reflective Layer]

In order to make the light reflective layer B have the reflectance characteristics described above, silver or a silver alloy needs to be used as a reflective material on the radiative surface H side (the resin material layer J side).

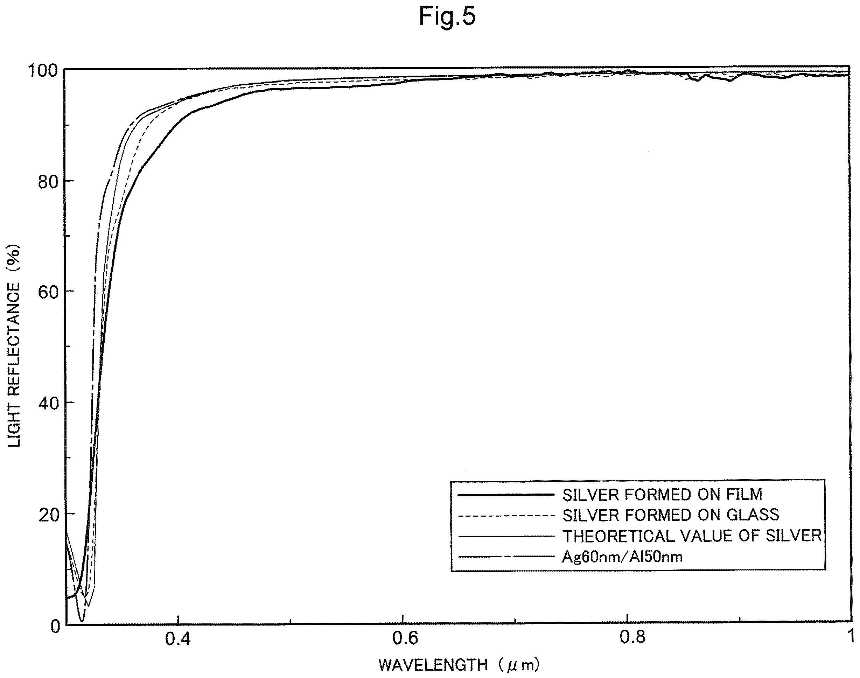

As shown in FIG. 5, when silver is used as a base material of the light reflective layer B, the light reflective layer B can have the required reflectance.

In a case where sunlight is to be reflected only by silver or a silver alloy in such a manner as to satisfy the reflectance characteristics described above, a thickness of 50 nm or more is required.

However, in order to make the light reflective layer B flexible, the thickness needs to be 100 µm or less. If the thickness is larger than 100 µm, the light reflective layer becomes difficult to bend.

It is possible to use, as a "silver alloy", an alloy obtained by adding copper, palladium, gold, zinc, tin, magnesium, nickel, or titanium in an amount of about 0.4% by mass to 4.5% by mass to silver, for example. As a specific example, it is possible to use "APC-TR (manufactured by Furuya Metal Co., Ltd.)", which is a silver alloy manufactured by adding copper and palladium to silver.

In order to make the light reflective layer B have the reflectance characteristics described above, it is also possible to adopt a layered structure including silver or a silver alloy adjacent to the protective layer D and aluminum or an aluminum alloy apart from the protective layer D. In this case as well, it is necessary to use silver or a silver alloy as the reflective material on the radiative surface H side (the resin material layer J side).

In the case where the light reflective layer is constituted by two layers made of silver (silver alloy) and aluminum (aluminum alloy), the thickness of the silver layer needs to be 10 nm or more and the thickness of the aluminum layer needs to be 30 nm or more.

However, in order to make the light reflective layer B flexible, the sum of the thickness of the silver layer and the thickness of the aluminum layer needs to be 100 µm or less. If the thickness is larger than 100 µm, the light reflective layer becomes difficult to bend.

It is possible to use, as an "aluminum alloy", an alloy obtained by adding copper, manganese, silicon, magnesium, zinc, carbon steel for mechanical structures, yttrium, lanthanum, gadolinium, or terbium to aluminum.

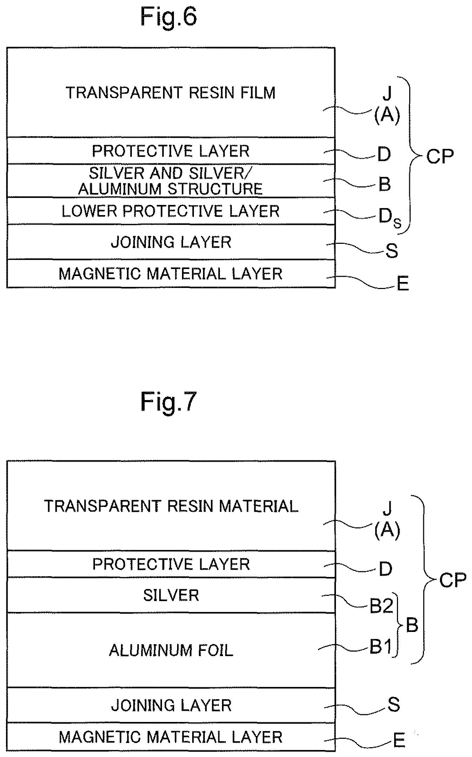

Silver and a silver alloy are weak to rain and moisture and need to be protected from them. Also, discoloration of silver and a silver alloy needs to be suppressed. Therefore, the protective layer D that protects silver needs to be adjacent to silver or a silver alloy as shown in FIGS. 6 to 9.

Details of the protective layer D will be described later.

### [Specific Configuration of Composite Cooling Material]

Resin materials forming the resin material layer J and the protective layer D are flexible, and accordingly, when the light reflective layer B is formed as a thin film, the light reflective layer B can be made flexible as well, and consequently the cooling layer CP can be made as a flexible film (radiative cooling film).

By attaching the cooling layer CP (radiative cooling film) to the outer surface of the magnetic material layer E with use of the joining layer S made of an adhesive agent or a pressure-sensitive adhesive agent as shown in FIGS. 6 to 9, it is possible to cool the magnetic material layer E.

The adhesive agent or the pressure-sensitive adhesive agent used for the joining layer S includes one or two or more of a vinyl chloride resin, a vinylidene chloride resin, a polyolefin resin, a polyester resin, an acrylic resin, a urethane resin, a silicone resin, and a rubber resin. Preferably, the joining layer S includes at least one of a vinyl chloride resin and a polyolefin resin.

Various forms are conceivable to make the cooling layer CP in the form of a film. For example, it is conceivable to apply the protective layer D and the resin material layer J to the light reflective layer B formed in a film shape. Alternatively, it is conceivable to attach the protective layer D and the resin material layer J to the light reflective layer B formed in a film shape. Alternatively, it is conceivable to apply or attach the protective layer D to the resin material layer J formed in a film shape, and form the light reflective layer B on the protective layer D through vapor deposition, sputtering, ion plating, a silver mirror reaction, or the like.

More specifically, a cooling layer CP (radiative cooling film) shown in FIG. 6 is obtained by forming the protective layer D on the upper side of the light reflective layer B, forming the resin material layer J on the protective layer D, and further forming a lower protective layer Ds on the lower side of the light reflective layer B in a case where the light reflective layer B is constituted by a single layer of silver or a silver alloy or two layers respectively made of silver (silver alloy) and aluminum (aluminum alloy). Note that the lower protective layer Ds is formed from an acrylic resin, for example.

As a method for producing the cooling layer CP (radiative cooling film) shown in FIG. 6, it is possible to use a method of applying the protective layer D, the light reflective layer B, and the lower protective layer Ds in this order on the resin material layer J in the form of a film to form these layers into a single piece.

A cooling layer CP (radiative cooling film) shown in FIG. 7 is obtained by forming the protective layer D on the upper side of the light reflective layer B, and forming the resin material layer J on the protective layer D in a case where the light reflective layer B is constituted by an aluminum layer B1 formed from an aluminum foil that functions as aluminum (an aluminum alloy) and a silver layer B2 made of silver or a silver alloy.

As a method for producing the cooling layer CP (radiative cooling film) shown in FIG. 7, it is possible to use a method of applying the silver layer B2, the protective layer D, and the resin material layer J in this order onto the aluminum layer B1 formed from an aluminum foil to form these layers into a single piece.

It is also possible to use another method of forming the resin material layer J in a film shape, applying the protective layer D and the silver layer B2 in this order on the film-shaped resin material layer J, and attaching the aluminum layer B1 to the silver layer B2.

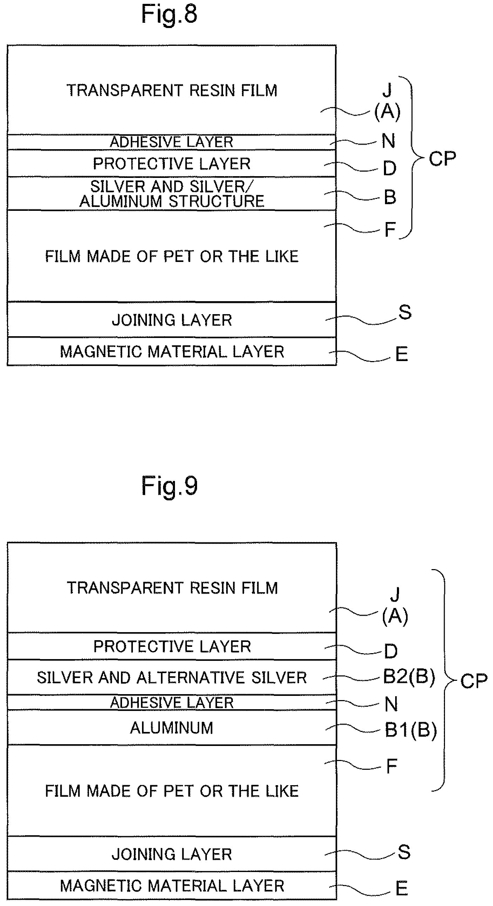

A cooling layer CP (radiative cooling film) shown in FIG. 8 is obtained by forming the protective layer D on the upper side of the light reflective layer B, forming the resin material layer J on the protective layer D, and forming a film layer F made of PET or the like on the lower side of the light reflective layer B in a case where the light reflective layer B is constituted by a single layer made of silver or a silver alloy or two layers respectively made of silver (silver alloy) and aluminum (aluminum alloy).

As a method for producing the cooling layer CP (radiative cooling film) shown in FIG. 8, it is possible to use a method of applying the light reflective layer B and the protective layer D in this order on the film layer F (corresponding to a substrate) formed in a film shape from PET (ethylene terephthalate resin) or the like to form these layers into a single piece, and joining the resin material layer J, which has been separately formed, to the protective layer D with use of an adhesive layer N.

Examples of adhesive agents (pressure-sensitive adhesive agents) that can be used for the adhesive layer N include a urethane adhesive agent (pressure-sensitive adhesive agent), an acrylic adhesive agent (pressure-sensitive adhesive agent), and an EVA (ethylene vinyl acetate) adhesive agent (pressure-sensitive adhesive agent), and it is desirable to use an adhesive agent (pressure-sensitive adhesive agent) that is highly transparent to sunlight.

A cooling layer CP (radiative cooling film) shown in FIG. 9 is obtained by forming the light reflective layer B that is constituted by an aluminum layer B1 that functions as aluminum (an aluminum alloy) and a silver layer B2 made of silver or a silver alloy (alternative silver) on a film layer F (corresponding to a substrate) formed in a film shape from PET (ethylene terephthalate resin) or the like in such a manner that the aluminum layer B1 is on the film layer F, and forming the protective layer D on the upper side of the silver layer B2, and forming the resin material layer J on the protective layer D.

As a method for producing the cooling layer CP (radiative cooling film) shown in FIG. 9, it is possible to use a method of applying the aluminum layer B1 to the film layer F to form the film layer F and the aluminum layer B1 as a single piece, applying the protective layer D and the silver layer B2 to the resin material layer J formed in a film shape to form the resin material layer J, the protective layer D, and the silver layer B2 as a single piece, and joining the aluminum layer B1 to the silver layer B2 with use of an adhesive layer N.

Examples of adhesive agents (pressure-sensitive adhesive agents) that can be used for the adhesive layer N include a urethane adhesive agent (pressure-sensitive adhesive agent), an acrylic adhesive agent (pressure-sensitive adhesive agent), and an EVA (ethylene vinyl acetate) adhesive agent (pressure-sensitive adhesive agent), and it is desirable to use an adhesive agent (pressure-sensitive adhesive agent) that is highly transparent to sunlight.

### [Details of Protective Layer]

The protective layer D is formed from a polyolefin resin with a thickness of 300 nm or more and 40 µm or less or polyethylene terephthalate with a thickness of 17 µm or more and 40 µm or less.

Examples of the polyolefin resin include polyethylene and polypropylene.

As described above, FIG. 2 shows the absorptivity of polyethylene for ultraviolet rays.

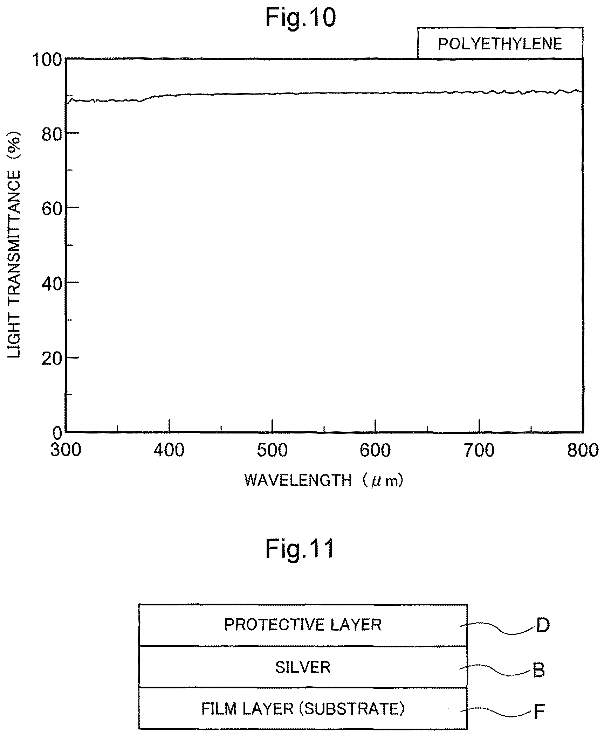

Also, FIG. 10 shows a light transmittance of polyethylene, which is preferably used as a synthetic resin to form the protective layer D.

The cooling layer CP (radiative cooling film) exhibits the radiative cooling effect not only at night but also under solar radiation. Accordingly, in order to maintain the state where the light reflective layer B exhibits its light reflecting function, it is necessary to prevent discoloration of silver constituting the light reflective layer B under solar radiation by protecting the light reflective layer B with the protective layer D.

In the case where the protective layer D is formed from a polyolefin resin with a thickness of 300 nm or more and 40 µm or less, the protective layer D is unlikely to deteriorate by absorbing ultraviolet rays because the polyolefin resin is a synthetic resin that has an absorptivity of 10% or less for ultraviolet rays over the entire wavelength range of ultraviolet rays from 0.295 µm to 0.4 µm.

Moreover, since the thickness of the polyolefin resin forming the protective layer D is 300 nm or more, the protective layer D favorably exhibits a blocking function of blocking radicals generated in the resin material layer J to keep the radicals from reaching silver or a silver alloy included in the light reflective layer B and blocking moisture that has permeated through the resin material layer J to keep the moisture from reaching silver or a silver alloy included in the light reflective layer B, and thus discoloration of silver or a silver alloy included in the light reflective layer B can be suppressed.

When ultraviolet rays are absorbed by the protective layer D formed from the polyolefin resin, the protective layer D deteriorates while forming radicals on the side of its surface apart from the light reflective layer B, but the generated radicals do not reach the light reflective layer B because the protective layer D has a thickness of 300 nm or more. Also, although the protective layer D deteriorates while forming radicals, the progress of deterioration is slow because absorption of ultraviolet rays is low, and therefore, the protective layer D exhibits the above-described blocking function for a long period of time.

In the case where the protective layer D is formed from an ethylene terephthalate resin with a thickness of 17 µm or more and 40 µm or less, the ethylene terephthalate resin is a resin material that has a higher absorptivity for ultraviolet rays than the polyolefin resin in the wavelength range of ultraviolet rays from 0.295 µm to 0.4 µm. However, the protective layer has a thickness of 17 µm or more, and therefore, the protective layer D favorably exhibits the blocking function of blocking radicals generated in the resin material layer J to keep the radicals from reaching silver or a silver alloy included in the light reflective layer B and blocking moisture that has permeated through the resin material layer J to keep the moisture from reaching silver or a silver alloy included in the light reflective layer B for a long period of time, and thus discoloration of silver or a silver alloy included in the light reflective layer B can be suppressed.

That is, the protective layer D formed from the ethylene terephthalate resin deteriorates by absorbing ultraviolet rays while forming radicals on the side of its surface apart from the light reflective layer B, but the generated radicals do not reach the light reflective layer B because the protective layer D has a thickness of 17 µm or more. Also, although the protective layer D deteriorates while forming radicals, the protective layer D has a thickness of 17 µm or more, and accordingly, exhibits the above-described blocking function for a long period of time.

When described in more detail, the ethylene terephthalate resin (PET) deteriorates as a result of ester bonds of ethylene glycol and terephthalic acid being cleaved by ultraviolet rays and radicals being formed. This deterioration progresses sequentially from the surface of the ethylene terephthalate resin (PET) irradiated with ultraviolet rays.

For example, when the ethylene terephthalate resin (PET) is irradiated with ultraviolet rays with an intensity equivalent to that in Osaka, ester bonds of the ethylene terephthalate resin (PET) are cleaved sequentially from the irradiated surface by a depth of about 9 nm per day. The ethylene terephthalate resin (PET) has been sufficiently polymerized, and therefore, a surface portion of the ethylene terephthalate resin (PET) where the cleavage has occurred does not damage silver (silver alloy) included in the light reflective layer B, but when a cleaved end of the ethylene terephthalate resin (PET) reaches the silver (silver alloy) included in the light reflective layer B, the silver (silver alloy) is discolored.

Therefore, in order to make the protective layer D durable for a year or longer when used outdoors, the protective layer needs to have a thickness of about 3 µm, which is calculated by adding up 9 nm/day for 365 days. In order to make the protective layer D formed from the ethylene terephthalate resin (PET) durable for three years or longer, the protective layer needs to have a thickness of 10 µm or more. In order to make the protective layer D durable for five years or longer, the protective layer needs to have a thickness of 17 µm or more.

Note that the upper limit value of the thickness of the protective layer D is set for the cases where the protective layer D is formed from the polyolefin resin or the ethylene terephthalate resin in order to avoid a situation in which the protective layer D exhibits thermal insulation properties, which do not contribute to radiative cooling. That is, as the thickness of the protective layer D is increased, the protective layer D exhibits thermal insulation properties, which do not contribute to radiative cooling, and therefore, the upper limit value of the thickness is set to prevent the protective layer D from exhibiting thermal insulation properties, which do not contribute to radiative cooling, while allowing the protective layer D to exhibit the function of protecting the light reflective layer B.

When the thickness of the protective layer D is increased, there is no demerit in preventing coloration of silver (silver alloy) included in the light reflective layer B, but there arises a problem in radiative cooling. That is, thermal insulation properties of a radiative cooling material are enhanced when the thickness is increased.

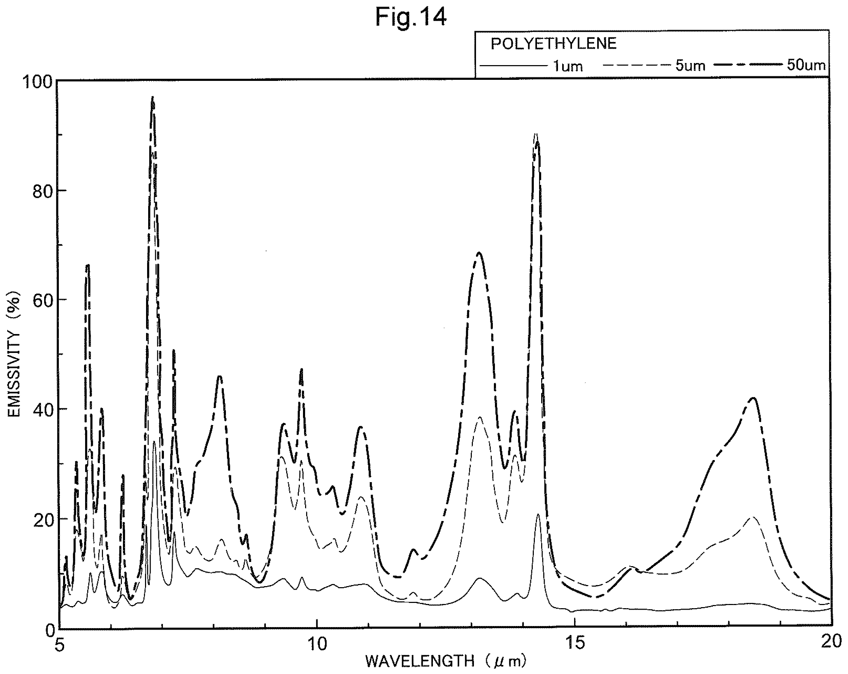

For example, in the case of a resin that contains polyethylene as a main component, which is an excellent synthetic resin for forming the protective layer D, the emissivity in the atmospheric window is small as shown in FIG. 14, and therefore, even if the thickness is increased, the increase does not contribute to radiative cooling. Conversely, thermal insulation properties of the radiative cooling material are enhanced when the thickness is increased. Next, when the thickness is increased, absorption through vibration of the main chain increases in the near-infrared range, and an effect of increasing absorption of sunlight increases.

For these reasons, a protective layer D having a large thickness is disadvantageous in radiative cooling. From the viewpoints described above, the thickness of the protective layer D formed from the polyolefin resin is preferably 5 µm or less, and more preferably 1 µm or less.

In the case where the composite cooling material includes the adhesive layer N between the resin material layer J and the protective layer D as shown in FIG. 8, radicals are generated from the adhesive layer N as well, but it is possible to keep the radicals generated in the adhesive layer N from reaching the light reflective layer B for a long period of time when the thickness of the polyolefin resin forming the protective layer D is 300 nm or more or the thickness of the ethylene terephthalate resin forming the protective layer D is 17 µm or more.

### [Consideration on Protective Layer]

In order to examine a difference in coloration of silver according to the protective layer D, samples that did not include the resin material layer J as the infrared radiative layer A and in which the protective layer D was exposed were produced as shown in FIG. 11 and coloration of silver after the samples were irradiated with simulated sunlight was examined.

That is, two types of resins, one of which being a common acrylic resin that absorbs ultraviolet rays (e.g., a methyl methacrylate resin in which a benzotriazole ultraviolet absorbing agent is mixed) and the other being polyethylene, were each applied as the protective layer D to a film layer F (corresponding to a substrate) provided with silver that served as the light reflective layer B, with use of a bar coater to form the samples, and functions of the resins as the protective layer D were examined. Thicknesses of the applied protective layer D were 10 µm and 1 µm, respectively.

Note that the film layer F (corresponding to a substrate) was formed in a film shape from PET (ethylene terephthalate resin) or the like.

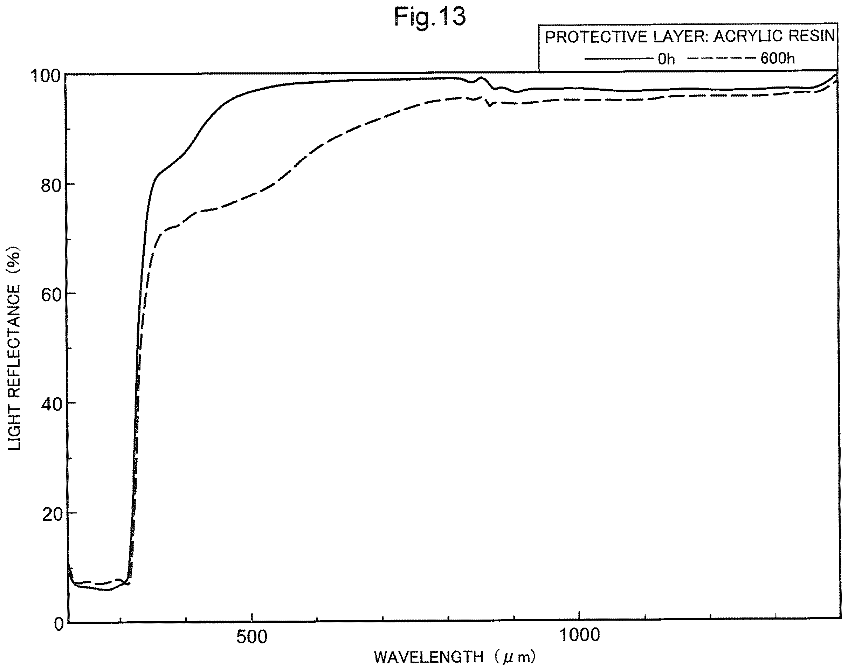

As shown in FIG. 13, in the case where the protective layer D was formed from the acrylic resin that absorbs ultraviolet rays well, the protective layer D was decomposed by ultraviolet rays and formed radicals, and silver was immediately discolored to yellow, which makes the cooling layer CP unable to function no longer (i.e., the cooling layer absorbs sunlight and the temperature increases under solar radiation, as is the case with common materials).

Note that the line denoted by 600h in FIG. 13 shows a reflectance spectrum after a xenon weather test (ultraviolet light energy: 60 W/m²) was performed for 600 h (hours) under the conditions specified in JIS 5600-7-7. Also, the line denoted by 0h shows a reflectance spectrum before the xenon weather test was performed.

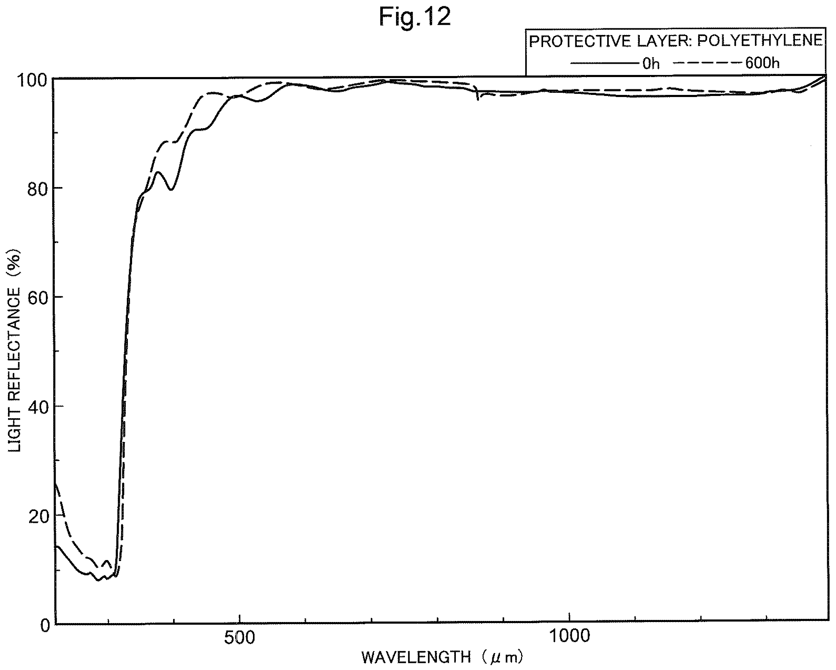

As shown in FIG. 12, in the case where the protective layer D was formed from polyethylene that has a low absorptivity for ultraviolet rays, it can be found that the reflectance did not decrease in the near-infrared range and the visible range. That is, a resin (polyolefin resin) that contains polyethylene as a main component absorbs almost no ultraviolet rays included in the sunlight reaching the ground, and accordingly, is unlikely to form radicals even when irradiated with sunlight. Therefore, silver included in the light reflective layer B is not colored even under solar radiation.

Note that the line denoted by 600h in FIG. 12 shows a reflectance spectrum after a xenon weather test (ultraviolet light energy: 60 W/m²) was performed for 600 h (hours) under the conditions specified in JIS 5600-7-7. Also, the line denoted by 0h shows a reflectance spectrum before the xenon weather test was performed.

Note that the reflectance spectrums in this wavelength range wave because of Fabry-Pérot resonance of the polyethylene layer. It can be found that positions of the resonance slightly differ between the line denoted by 0h and the line denoted by 600h due to the thickness of the polyethylene layer being changed by heat applied during the xenon weather test, for example, but no significant decrease in the reflectance due to discoloration of silver to yellow is observed in the ultraviolet-visible range.

Note that a fluorocarbon resin can also be used as a material of the protective layer D from the viewpoint of ultraviolet absorption, but when the protective layer D is actually formed from a fluorocarbon resin, the fluorocarbon resin is colored and deteriorates while the protective layer D is formed. Therefore, the fluorocarbon resin cannot be used as a material of the protective layer D.

Also, silicone can be used as a material of the protective layer D from the viewpoint of ultraviolet absorption, but adhesion between silicone and silver (silver alloy) is very bad, and therefore, silicone cannot be used as a material of the protective layer D.

### [Mixing of Plasticizer]

In the case where a vinyl chloride-based resin is used to form the resin material layer J, it is preferable to increase flexibility by mixing a plasticizer in the vinyl chloride-based resin.

The plasticizer mixed in the vinyl chloride-based resin is any one of phthalic acid esters, aliphatic dibasic acid esters, and phosphoric acid esters.

The plasticizer is mixed in an amount of 1 part by weight or more and 200 parts by weight or less relative to 100 parts by weight of the vinyl chloride-based resin. From the viewpoint of processing, the plasticizer is preferably mixed in an amount of 100 parts by weight or less.

Any one of or a combination of two or more of the following aliphatic dibasic acid esters may be used as the plasticizer: adipic acid esters, adipic acid ester copolymers, azelaic acid esters, azelaic acid ester copolymers, sebacic acid esters, sebacic acid ester copolymers, succinic acid esters, and succinic acid ester copolymers.

An aliphatic dibasic acid ester used as the plasticizer is preferably formed through ester bonding between an aliphatic dibasic acid and two molecules of a saturated aliphatic alcohol.

A phthalic acid ester used as the plasticizer is preferably formed through ester bonding between phthalic acid and two molecules of a saturated aliphatic alcohol.

A phosphoric acid ester used as the plasticizer is preferably a phosphoric acid triester or an aromatic phosphoric acid ester.

### <Details of Phthalic Acid Esters>

Examples of phthalic acid esters include:
dimethyl phthalate (DMP), diethyl phthalate (DEP), dibutyl phthalate (DPP), di-2-ethylhexyl phthalate (DOP), diisononyl phthalate (DINP), diisodecyl phthalate (DIDP), diundecyl phthalate (DUP), ditridecyl phthalate (DTDP), bis(2-ethylhexyl) terephthalate (DOTP), and bis(2-ethylhexyl) isophthalate (DOIP).

### <Details of Aliphatic Dibasic Acid Esters>

Examples of aliphatic dibasic acid esters include:
dibutyl adipate (DBA), diisobutyl adipate (DIBA), di-2-ethylhexyl adipate (DOA), diisononyl adipate (DINA), diisodecyl adipate (DIDA), bis-2-ethylhexyl azelate (DOZ), dibutyl sebacate (DBS), di-2-ethylhexyl sebacate (DOS), diisononyl sebacate (DINS), and diethyl succinate (DESU).

Examples of aliphatic dibasic acid esters also include an aliphatic polyester having a molecular weight of 400 to 4000 and synthesized through copolymerization (polyesterification) between a dibasic acid such as adipic acid and a diol (difunctional alcohol or glycol).

### <Phosphoric Acid Triester>

Examples of phosphoric acid triesters include:
trimethyl phosphate (TMP), triethyl phosphate (TEP), tributyl phosphate (TBP), and tris(2-ethylhexyl) phosphate (TOP).

### <Aromatic Phosphoric Acid Ester>

Examples of aromatic phosphoric acid esters include:
triphenyl phosphate (TPP), tricresyl phosphate (TCP), trixylenyl phosphate (TXP), cresyl diphenyl phosphate (CDP), and 2-ethylhexyldiphenyl phosphate.

### <Evaluation of Suitable Plasticizer>

Plasticizers used for a vinyl chloride resin include phthalic acid esters, aliphatic dibasic acid esters, phosphoric acid triesters, aromatic phosphoric acid esters, trimellitic acid esters, and epoxidized aliphatic acid esters. Compounds listed below were selected from these plasticizers, and 43 parts by weight of each plasticizer was mixed relative to 100 parts by weight of a vinyl chloride resin and evaluated through a xenon weather test.

Note that 0.5 parts by weight of a triazine-based ultraviolet absorbing agent and 0.5 parts by weight of a hindered amine photostabilizer were kneaded with 100 parts by weight of the vinyl chloride resin.

Di-2-ethylhexyl phthalate (DOP) and diisodecyl phthalate (DIDP) were selected as representative examples of phthalic acid esters.

Di-2-ethylhexyl adipate (DOA), a butanediol adipate copolymer (average molecular weight: about 1000), and diisononyl adipate (DINA) were selected as representative examples of aliphatic dibasic acid esters.

Tributyl phosphate (TBP) was selected as a representative example of phosphoric acid triesters.

Tricresyl phosphate (TCP) was selected as a representative example of aromatic phosphoric acid esters.

Tris(2-ethylhexyl) trimellitate (TOTM) was selected as a representative example of trimellitic acid esters.

Epoxidized soybean oil was selected as a representative example of epoxidized aliphatic acid esters.

Durability was evaluated based on results of a durability test in which a xenon weather test was performed for 1920 hours (corresponding to 4 years of outdoor exposure). Note that 487 hours correspond to one year in terms of ultraviolet rays.

The xenon weather test was performed under the following conditions.
UV intensity: 180 W/m² (wavelength: 295 to 400 nm)
   <Conditions without water sprinkling> BPT: 89°C, humidity: 50%, 1 hour and 42 minutes.
   <Conditions with water sprinkling> temperature in the chamber: 38°C, humidity: 90%, 18 minutes.

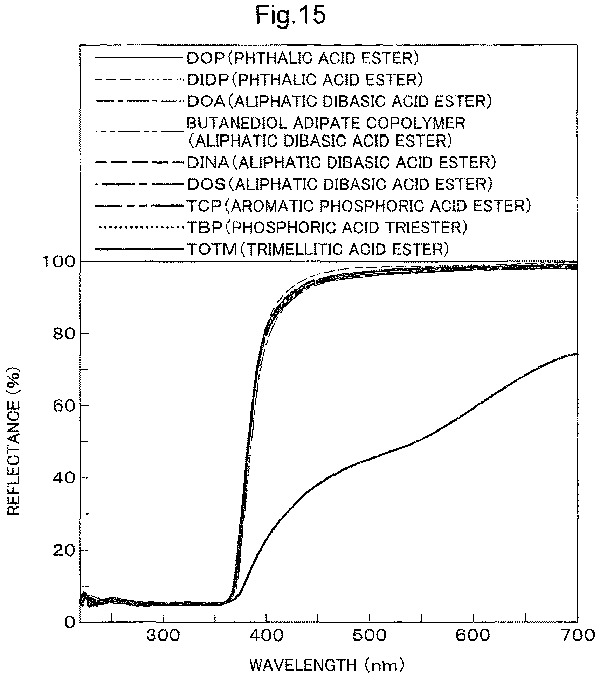

FIG. 15 shows results of the test carried out for 1920 hours. Note that a vinyl chloride resin was used for the experiment in the present embodiment, but similar results can be obtained for a vinylidene chloride resin as well.

Through the experiment described above, it was found that durability significantly decreased in the cases where a trimellitic acid ester (TOTM) and an epoxidized aliphatic acid ester (epoxidized soybean oil) were used as plasticizers. Note that the result of the epoxidized aliphatic acid ester is not shown in FIG. 15 because discoloration to brown occurred once 1120 hours had elapsed and the test could not be continued.

On the other hand, it was found that when phthalic acid esters, aliphatic dibasic acid esters, phosphoric acid triesters, and aromatic phosphoric acid esters are used, the cooling layer CP can be sufficiently durable to be used for about 4 years. That is, it was found that when phthalic acid esters, aliphatic dibasic acid esters, phosphoric acid triesters, and aromatic phosphoric acid esters are used as plasticizers mixed with a vinyl chloride-based resin, the reflectance of the cooling layer CP does not decrease even when about 4 years elapses, but when trimellitic acid esters and epoxidized aliphatic acid esters are used as plasticizers mixed with the vinyl chloride-based resin, the reflectance of the cooling layer CP significantly decreases before about 4 years elapses.

The test results described above show that excellent durability can be obtained with use of phthalic acid esters, aliphatic dibasic acid esters, phosphoric acid triesters, and aromatic phosphoric acid esters as plasticizers for the vinyl chloride-based resin, but sufficient durability cannot be obtained with use of trimellitic acid esters and epoxidized aliphatic acid esters.

Reasons for this will be considered and systematized later.

### [Other Additives]

A flame retardant, a stabilizer, an auxiliary stabilizer, a filler, an antioxidant, an ultraviolet absorbing agent, and a photostabilizer may be added to the vinyl chloride-based resin forming the resin material layer J.

### [Another Configuration of Cooling Layer]

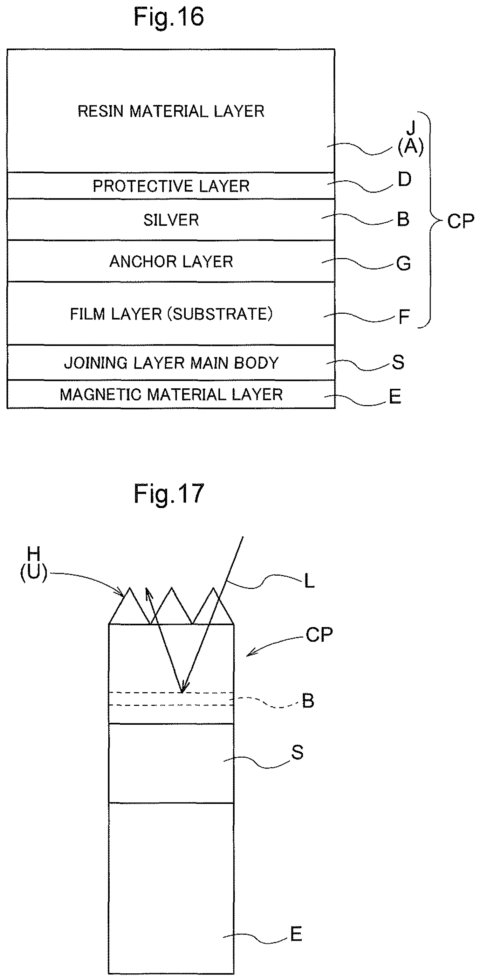

As shown in FIG. 16, the cooling layer CP may include an anchor layer G on a film layer F (corresponding to a substrate), and the light reflective layer B, the protective layer D, and the infrared radiative layer A may be formed on the anchor layer G.

Note that the film layer F (corresponding to a substrate) is formed in a film shape from PET (ethylene terephthalate resin) or the like, for example.

The anchor layer is introduced to strengthen adhesion between the film layer F and the light reflective layer B. That is, when a silver (Ag) layer is directly formed on the film layer F, the silver layer may be easily peeled off. It is desirable that the anchor layer G contains an acrylic resin, a polyolefin, or urethane as a main component, and a compound that has an isocyanate group or a melamine resin is mixed therein. The anchor layer is a coating applied to a portion that is not directly irradiated with sunlight, and may be constituted by a material that absorbs ultraviolet rays.

Note that adhesion between the film layer F and the light reflective layer B can be strengthened with use of a method other than the method of introducing the anchor layer G. For example, when the surface of the film layer F, on which another layer is to be formed, is roughened by being irradiated with plasma, adhesion is strengthened.

### [Consideration on Joining Layer]

The magnetic material layer E and the cooling layer CP are joined by the joining layer S provided between the magnetic material layer E and the cooling layer CP and including one or more of a vinyl chloride resin, a vinylidene chloride resin, a polyolefin resin, an acrylic resin, a urethane resin, a silicone resin, and a rubber resin. More preferably, the joining layer S includes at least a vinyl chloride resin and a polyolefin resin.

The thickness of the magnetic material layer E is preferably about 0.2 mm or more and 2.0 mm or less. As shown in Table 1 below, when the magnetic material layer has a thickness of 0.2 mm or more, magnetic force can be favorably exhibited as attaching force with respect to a plate-shaped metal member that is an attachment target and long-term attachment stability can be increased. When the magnetic material layer has a thickness of 2.0 mm or less, it is possible to maintain at least a certain level of heat dissipation properties in the direction from the back surface side (the side opposite to the cooling layer CP) toward the outer surface side (the cooling layer CP side) even if there is a heat source on the back surface side (the side opposite to the cooling layer CP) of the composite cooling material W.

**[Table 1]**

| Thickness of magnetic material | Magnetic force (long-term attachment stability) | Heat dissipation properties in the presence of internal heat source |
|---|---|---|
| 0.05mm | × | ○ |
| 0.20mm | ○ | ○ |
| 0.50mm | ○ | ○ |
| 1.00mm | ○ | ○ |
| 2.00mm | ○ | ○ |
| 3.00mm | ○ | × |
| 5.00mm | ○ | × |

Here, Table 2 shows a result of a test in which the magnetic material was compared with other materials in terms of peeling reusability, a temperature difference between the temperature on the back surface side and the temperature on the outer surface side, and heat conductivity from the back surface side to the cooling layer CP.

In this test, SPACECOOL film SCF-A25M-ONS manufactured by SPACECOOL INC. was used as a film with pressure-sensitive adhesive agent, which was used as another material for comparison, and SPACECOOL-200E manufactured by SPACECOOL INC. was used as a film material.

This test revealed that the peeling reusability of the magnetic material was equivalent to that of the film material but was higher than that of the film with pressure-sensitive adhesive agent. The magnetic material exhibited a high heat conductivity similarly to the film with pressure-sensitive adhesive agent and the heat conductivity was higher than that of the film material in which an air layer was formed.

**[Table 2]**

| | Peeling reusability | Heat conductivity from back surface side to multilayer cooling layer |
|---|---|---|
| Magnetic material | ○ | ○ High |
| Film with pressure-sensitive adhesive agent | × | ○ High |
| Film material | ○ | × Low (* in the presence of air layer) |

As shown in FIG. 17, the radiative surface H of the cooling layer CP in the composite cooling material W may have irregularities.

For example, protrusions U may be formed on the radiative surface H.

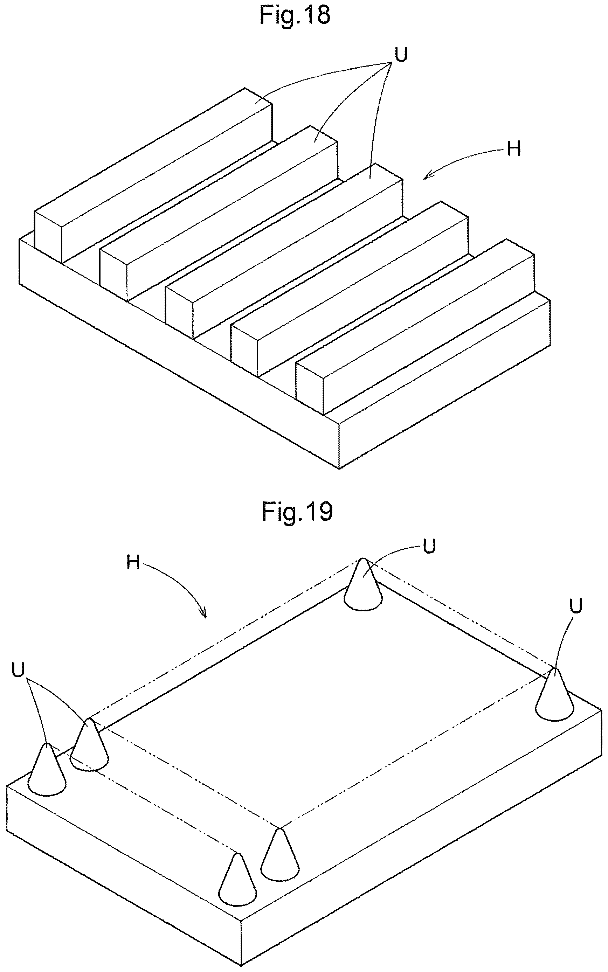

Specific examples of such irregularities include various structures such as: a line-and-space structure (see FIG. 18) in which rectangular parallelepiped protrusions U are next to one another; a structure in which cone-shaped protrusions U are arranged in the longitudinal direction and the lateral direction (see FIG. 19); a structure in which triangular prism-shaped or pyramid-shaped protrusions U are arranged in the line-and-space arrangement (not shown); a structure in which cubic protrusions U are arranged in the longitudinal direction and the lateral direction (not shown); and a structure in which protrusions U are arranged at random (not shown).

Note that a height difference of irregularities formed in the radiative surface H is about 100 µm.

In the case where irregularities are formed in the radiative surface H, if heat is transferred from various heat sources to the inner side of the magnetic material layer E (the side opposite to the cooling layer CP), the temperature on the inner side of the magnetic material layer E of the composite cooling material W is more likely to increase than the environmental temperature (ambient temperature) is during the day although the cooling layer CP is provided. If the temperature on the inner side of the magnetic material layer E of the composite cooling material W is higher than the environmental temperature (ambient temperature), the outside air serves as a cold heat source, and it is desirable to enhance heat exchange with the outside air. From this viewpoint, it is preferable to enhance heat exchange with wind on the radiative surface H side of the composite cooling material W by forming irregularities in the radiative surface H of the composite cooling material W to increase the surface area.

From this viewpoint, it is desirable to form irregularities in the infrared radiative layer A of the cooling layer CP through embossing processing or the like as shown in FIG. 17 to increase the surface area.

That is, this structure is preferably introduced in a case where there is a heat source other than sunlight and a heated atmosphere, the temperature of the magnetic material layer E, on which the cooling layer CP is attached, exceeds the environmental temperature (ambient temperature), and the environmental temperature (ambient temperature) serves as cold heat.

Forming irregularities in the radiative surface H is also advantageous in terms of appearance. When compared with a case where the radiative surface H (upper surface) of the cooling layer CP is a mirror surface, sunlight is more scattered in the case where irregularities are formed in the radiative surface H, and therefore, glare on the cooling layer CP is suppressed. When glare on the cooling layer CP is suppressed, visibility is increased, and consequently safety during travel is increased.

Note that, even if a "light scattering" function is imparted to the radiative surface H, light absorption by silver (silver alloy) included in the light reflective layer B does not increase, and accordingly, radiative cooling can be favorably performed.

### [Another Configuration of Cooling Layer]

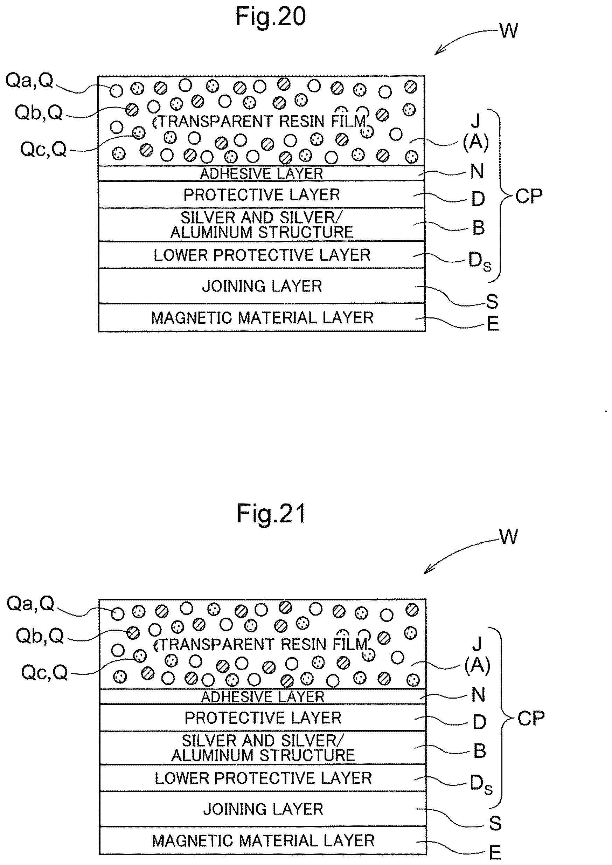

As shown in FIGS. 20 and 21, a plurality of particulate light reflecting portions Q that reflect light may be included in the resin material layer J that constitutes the infrared radiative layer A. The light reflecting portions Q include air bubbles Qa, an inorganic filler Qb, and an organic filler Qc. The particle size of the light reflecting portions Q is 1 nm or more and 300 µm or less, and is more preferably 10 nm or more and 100 µm or less from the viewpoint of dispersibility and cohesiveness. Note that an "average particle size" defined in JIS can be suitably used as the particle size of the light reflecting portions Q.

Examples of methods for forming the light reflecting portions Q in the resin material layer J include calendering performed using a compound resin obtained by kneading the light reflecting portions Q and a resin that serves as a binder. However, there is no limitation to this method.

The proportion of the light reflecting portions Q in the resin material layer J is preferably about 0.01% by volume or more and 20% by volume or less. The light reflecting portions Q are porous.

The inorganic filler Qb includes at least one type of particles selected from glass microbeads, ceramic microbeads, silicon oxide particles, silicon carbide particles, silicon nitride particles, barium sulfate particles, and calcium carbonate particles.
The organic filler Qc includes at least one type of polymer having a functional group selected from C-O, C-Cl, C-F, C-N, C-Si, and Si-O.

By providing the light reflecting portions Q in the resin material layer J, it is possible to make the resin material layer J exhibit a solar reflection function in addition to the radiative cooling function. If the solar reflection function of the light reflecting portions Q is sufficiently high, the light reflective layer B is omitted.

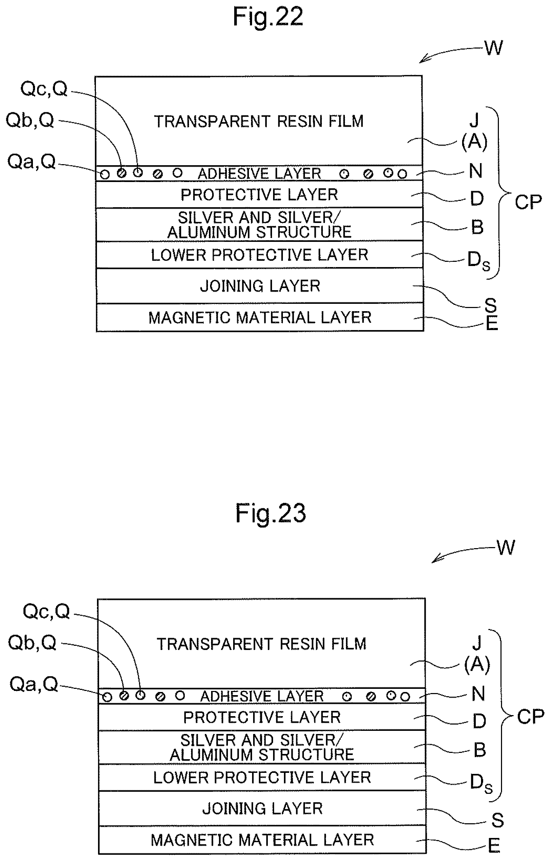

Alternatively, in cases where an adhesive layer N that joins the resin material layer J to the protective layer D is provided between the resin material layer J and the protective layer D as shown in FIGS. 22 and 23, the light reflecting portions Q may be formed in the adhesive layer N.

A urethane adhesive agent, a urethane pressure-sensitive adhesive agent, an acrylic adhesive agent, an acrylic pressure-sensitive adhesive agent, an ethylene vinyl acetate adhesive agent, an ethylene vinyl acetate pressure-sensitive adhesive agent, or the like can be preferably used to form the adhesive layer.

That is, examples of an adhesive agent (pressure-sensitive adhesive agent) used for the adhesive layer N include a urethane adhesive agent (pressure-sensitive adhesive agent), an acrylic adhesive agent (pressure-sensitive adhesive agent), and an EVA (ethylene vinyl acetate) adhesive agent (pressure-sensitive adhesive agent), and an adhesive agent (pressure-sensitive adhesive agent) that is highly transparent to sunlight is used.

Note that the adhesive layer N has a thickness of about 10 µm, for example.

Note that the composite cooling material W shown in FIGS. 20 to 23 have configurations similar to that of the composite cooling material W shown in FIG. 8, but in the case where the light reflecting portions Q are formed in the resin material layer J, it is possible to adopt the configurations of the composite cooling material W shown in FIGS. 6, 7, and 9.

In the case where the light reflecting portions Q are formed in the resin material layer J, the light reflecting portions Q formed in the transparent resin material layer J are visible when the cooling layer CP is viewed from the radiative surface H side, and accordingly, the composite cooling material W appears white as viewed from the radiative surface H side due to a light scattering effect of the light reflecting portions Q, and the appearance of the composite cooling material W can be improved.

In the case where the light reflecting portions Q are formed in the adhesive layer N joining the resin material layer J and the protective layer D, the light reflecting portions Q mixed in the adhesive layer N are visible through the transparent resin material layer J when the cooling layer CP is viewed from the radiative surface H side, and accordingly, the composite cooling material W appears white as viewed from the radiative surface H side due to the light scattering effect of the light reflecting portions Q, and the appearance of the composite cooling material W can be improved.

Note that the light reflecting portions Q may be formed in both the resin material layer J and the adhesive layer N.

Note that when the inorganic filler Qb or the organic filler Qc is used to form the light reflecting portions Q in the resin material layer J, irregularities are formed in both front and rear surfaces of the resin material layer J.

In the case where irregularities are formed in the rear surface of the resin material layer J, it is desirable to provide the adhesive layer N between the resin material layer J and the protective layer D.

That is, even if there are irregularities in the rear surface of the resin material layer J, it is possible to appropriately join the resin material layer J to the protective layer D due to the adhesive layer N (joining layer) between the resin material layer J and the protective layer D.

Note that in the case where there are irregularities in the rear surface of the resin material layer J, it is also possible to directly join the resin material layer J to the protective layer D through plasma bonding, for example. In the plasma bonding, radicals are formed on joining surfaces of the resin material layer J and the protective layer D by emitting plasma toward these surfaces, and the surfaces are bonded by the radicals.

### [Mixing of Filler in Protective Layer]

When a filler (at least one of an inorganic filler and an organic filler) is mixed in the protective layer D, irregularities are formed in the rear surface of the protective layer D that comes into contact with the light reflective layer B, and consequently irregularities are formed in the surface of the light reflective layer B, and therefore, the filler needs to be kept from being mixed in the protective layer D. That is, when irregularities are formed in the surface of the light reflective layer B, the light reflective layer B cannot reflect light appropriately, and consequently, radiative cooling cannot be performed appropriately.

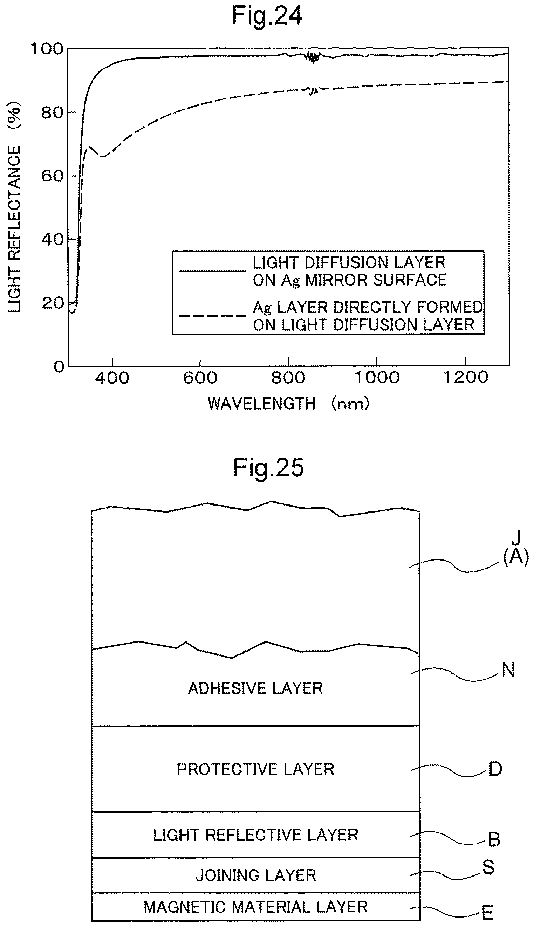

In this regard, an experimental result will be described based on FIG. 24.

In FIG. 24, "Ag layer directly formed on light diffusion layer" means that the light reflective layer B was formed from silver (Ag) through vapor deposition or the like on a surface of the infrared radiative layer A (resin material layer J) in which a filler was mixed or irregularities were formed through embossing processing in a surface facing the Ag layer, i.e., the light reflective layer B.

Also, "light diffusion layer on Ag mirror surface" means that the upper surface of the Ag layer, i.e., the light reflective layer B, was formed into a mirror surface, and the protective layer D and the infrared radiative layer A (resin material layer J) in which the filler was mixed or irregularities were formed through embossing processing were stacked on the Ag layer.

As shown in FIG. 24, in the case of "Ag layer directly formed on light diffusion layer", irregularities were formed in a surface of the light reflective layer B, and therefore, the light reflectance significantly decreased, but in the case of "light diffusion layer on Ag mirror surface", the mirror surface of the light reflective layer B was maintained and an appropriate reflectance was obtained.

### [Another Configuration of Infrared Radiative Layer]

As shown in FIG. 25, irregularities may be formed in front and rear surfaces of the resin material layer J constituting the infrared radiative layer A to provide a light scattering configuration.

With this configuration, it is possible to suppress glare on the radiative surface H when the radiative surface H is seen.

That is, front and rear surfaces of the resin material layer J of the cooling layers CP shown in FIGS. 6 to 9 are both flat and the light reflecting portions Q are not mixed in the resin material layer J. In this case, the radiative surface H is a mirror surface and there is glare when the radiative surface H is seen, but the glare can be suppressed with the light reflecting portions Q.

Irregularities can be formed in both of the front and rear surfaces of the resin material layer J through embossing processing or processing for scratching the surfaces, for example.

When the adhesive layer N is provided between the resin material layer J and the protective layer D, the resin material layer J and the protective layer D can be joined appropriately even if the rear surface of the resin material layer J has irregularities.

### [Other Embodiments]

Other embodiments are listed below.
(1) In the above embodiment, an example in which the protective layer D is provided is described, but the protective layer D may be omitted.
(2) In the above embodiment, an example is described in which the cooling layer CP has the first optical characteristic of having a solar reflectance of 80% or more and the second optical characteristic of having an average emissivity of 80% or more, which is a wavelength average emissivity of infrared light in a wavelength range of 8 µm or more and 14 µm or less. However, there is no limitation to this configuration, and the cooling layer CP may have only the first optical characteristic.
   Alternatively, a configuration is also possible in which the cooling layer CP does not include the light reflective layer B but includes the light reflecting portions Q in the resin material layer J that does not have the second optical characteristic.
   Furthermore, the cooling layer CP may be composed of the resin material layer J that does not have the second optical characteristic and the light reflective layer B. In this case, both the configuration in which the resin material layer J includes the light reflecting portions Q and the configuration in which the resin material layer J does not include the light reflecting portions Q are possible.
(3) In the above embodiment, a configuration is described in which the resin material layer J that constitutes the infrared radiative layer A includes the plurality of particulate light reflecting portions Q that reflect light, but the light reflecting portions Q do not necessarily have to be provided.

Also, a configuration is described in which the light reflecting portions Q include the air bubbles Qa, the inorganic filler Qb, and the organic filler Qc.

However, there is no limitation to this configuration, and a configuration is also possible in which the light reflecting portions Q include at least one of the air bubbles Qa, the inorganic filler Qb, and the organic filler Qc.

Also, an example is described in which the light reflecting portions Q have a particle size of 1 nm or more and 300 µm or less, but a configuration is also possible in which light reflecting portions Q having a particle size outside this range are included.

(4) Inorganic materials such as silicon dioxide (SiO₂), titanium oxide (TiO₂), aluminum oxide (Al₂O₃), magnesium oxide (MgO), and calcium carbonate (CaCO₃) may be used to form the light reflecting portions Q.

In particular, particles of titanium oxide (TiO₂) that do not exhibit photocatalytic activity and have a size of about 200 nm can be preferably used.

Also, the titanium oxide (TiO₂) may be provided with at least one of an alumina coating, a silica coating, and a zirconia coating. This configuration is advantageous in appropriately keeping the light reflecting portions Q from exhibiting photocatalytic activity and suppressing deterioration of the resin material layer J.

The configurations disclosed in the above embodiment (including the other embodiments, the same applies hereinafter) can be applied in combination with configurations disclosed in other embodiments so long as no contradiction arises. Also, the embodiments disclosed in the present specification are examples, and embodiments of the present invention are not limited to the disclosed embodiments, and can be modified as appropriate within a range not deviating from the object of the present invention.

### Industrial Applicability

The present disclosure can be used for a composite cooling material whose ease of use is improved.

### Description of Reference Signs

A: Infrared radiative layer
B: Light reflective layer
E: Magnetic material layer
H: Radiative surface
J: Resin material layer
Q: Light reflecting portions
Q2: Inorganic filler
Q3: Organic filler

## Claims

1. A composite cooling material comprising:
a magnetic material layer including a magnetic material; and
a cooling layer provided on an outer surface of the magnetic material layer,
wherein the cooling layer has a first optical characteristic of having a solar reflectance of 80% or more.

2. The composite cooling material according to claim 1,
wherein the cooling layer includes: an infrared radiative layer having a radiative surface for radiating infrared light; and a light reflective layer on a side of the infrared radiative layer, which is opposite to the radiative surface, and the cooling layer has a second optical characteristic of having an average emissivity of 80% or more, the average emissivity being a wavelength average emissivity of infrared light in a wavelength range of 8 µm or more and 14 µm or less,
the infrared radiative layer is a resin material layer including a vinyl chloride resin or a vinylidene chloride resin and having a thickness adjusted so that the resin material layer emits heat radiation energy greater than absorbed solar energy in a wavelength range from 8 µm to 14 µm,
the light reflective layer includes silver or a silver alloy, and
the cooling layer and the magnetic material layer are joined by a joining layer including any one or two or more of a vinyl chloride resin, a vinylidene chloride resin, a polyolefin resin, a polyester resin, an acrylic resin, a urethane resin, a silicone resin, and a rubber resin.

3. The composite cooling material according to claim 1 or 2,
wherein the joining layer includes at least one of a vinyl chloride resin and a polyolefin resin.

4. The composite cooling material according to claim 1 or 2,
wherein the magnetic material layer includes at least ferrite and a binder resin and has a thickness of 0.2 mm or more and 2.0 mm or less.

5. The composite cooling material according to claim 1 or 2,
wherein the cooling layer includes an infrared radiative layer having a radiative surface for radiating infrared light, and
the infrared radiative layer includes a plurality of particulate light reflecting portions that reflect light.

6. The composite cooling material according to claim 5,
wherein the light reflecting portions have a particle size of 1 nm or more and 300 µm or less.

7. The composite cooling material according to claim 6,
wherein the light reflecting portions are porous.

8. The composite cooling material according to claim 6,
wherein the light reflecting portions include at least one of an inorganic filler and an organic filler,
the inorganic filler includes at least one type of particles selected from glass microbeads, ceramic microbeads, silicon oxide particles, silicon carbide particles, silicon nitride particles, barium sulfate particles, and calcium carbonate particles, and
the organic filler includes at least one type of polymer having a functional group selected from C-O, C-Cl, C-F, C-N, C-Si, and Si-O.

9. The composite cooling material according to claim 1 or 2,
wherein the cooling layer includes an inorganic filler, and
the inorganic filler includes at least one type of particles selected from glass microbeads, ceramic microbeads, silicon oxide particles, silicon carbide particles, silicon nitride particles, barium sulfate particles, and calcium carbonate particles.

10. The composite cooling material according to claim 2,
wherein the thickness of the resin material layer is adjusted so that the resin material layer has light absorption properties that allow for a wavelength average absorptivity of 13% or less in a wavelength range from 0.4 µm to 0.5 µm, a wavelength average absorptivity of 4% or less in a wavelength range from 0.5 µm to 0.8 µm, a wavelength average absorptivity of 1% or less in a wavelength range from 0.8 µm to 1.5 µm, and a wavelength average absorptivity of 40% or less in a wavelength range from 1.5 µm to 2.5 µm.

11. The composite cooling material according to claim 2,
wherein the light reflective layer has a reflectance of 90% or more in a wavelength range from 0.4 µm to 0.5 µm, and a reflectance of 96% or more with respect to light having a wavelength longer than 0.5 µm.

12. The composite cooling material according to claim 2,
wherein the light reflective layer has a thickness of 50 nm or more.

13. The composite cooling material according to claim 2,
wherein the light reflective layer has a layered structure including silver or a silver alloy close to the resin material layer and aluminum or an aluminum alloy apart from the resin material layer.
